(19) Europäisches Patentamt
European Patent Office
Office européen des brevets

(11) **EP 3 032 277 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(21) Anmeldenummer: **14197717.3**

(22) Anmeldetag: **12.12.2014**

(51) Int Cl.:
*G01S 17/10* (2020.01)     *G01S 17/32* (2020.01)
*G01S 17/36* (2006.01)     *G01S 17/42* (2006.01)
*G01S 17/66* (2006.01)     *G01S 17/87* (2020.01)
*G01B 9/02* (2006.01)     *G01S 7/481* (2006.01)
*G01S 7/486* (2020.01)

(54) **LASERTRACKER**

LASER TRACKER

APPAREIL DE SUIVI LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.06.2016 Patentblatt 2016/24**

(73) Patentinhaber: **Leica Geosystems AG**
**9435 Heerbrugg (CH)**

(72) Erfinder:
 • **Böckem, Burkhard**
 **5415 Rieden (CH)**
 • **Lüthi, Thomas**
 **5000 Aarau (CH)**
 • **Fuchs, Simon**
 **5040 Schöftland (CH)**

(74) Vertreter: **Kaminski Harmann**
**Patentanwälte AG**
**Landstrasse 124**
**9490 Vaduz (LI)**

(56) Entgegenhaltungen:
**EP-A1- 1 645 890      EP-A1- 1 882 959**
**EP-A1- 2 523 017      EP-A1- 2 589 982**
**WO-A1-2011/076907   DE-A1-102012 001 754**
**US-A1- 2006 066 836   US-A1- 2014 226 145**

**Beschreibung**

Die Erfindung betrifft einen Lasertracker mit mindestens zwei in die Anzieleinheit integrierten Entfernungsmessern, wobei ein erster Entfernungsmesser zur fortlaufenden Verfolgung eines Zielpunkts ausgestaltet ist, und ein zweiter Entfernungsmesser für eine Entfernungsmessung mittels eines gepulsten Licht- bzw. Laserstrahls, ausgestaltet für eine Entfernungsmessung mittels Waveform Digitizing (WFD). Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z. B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung oder mittels des Fizeau-Prinzips ermittelt.

Lasertracker nach dem Stand der Technik können zusätzlich mit einer optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z. B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines sogenannten Messhilfsinstruments mit Markierungen, deren relative Lage zueinander bekannt ist, kann auf eine Orientierung eines an dem Messhilfsinstrument angeordneten Objekts (z. B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Das Objekt, dessen Position und Orientierung mit dem genannten Messgerät vermessen wird, muss damit beispielsweise nicht eine Messsonde selbst sondern kann das Messhilfsmittel sein. Dieses wird als Teil des Messsystems für die Vermessung in eine relativ zum Zielobjekt mechanisch definierte oder während der Vermessung bestimmbare Position gebracht, wobei über dessen vermessene Position und Orientierung auf die Position und gegebenenfalls die Orientierung beispielsweise der Messsonde geschlossen werden kann.

Derartige Messhilfsinstrumente können durch sogenannte Tastwerkzeuge, die mit ihrem Kontaktpunkt auf einem Punkt des Zielobjektes positioniert werden, verkörpert sein. Das Tastwerkzeug weist Markierungen, z. B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z. B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Feinanzielsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Für das Bestimmen der Orientierung des Messhilfsmittels wird eine Erfassungsrichtung der Kamera fortlaufend so ausgerichtet, dass ein Bild in Richtung des Tracking-Strahls des Lasertrackers erfassbar ist. Die Kamera kann weiters über eine Zoomfunktion verfügen, wobei eine Vergrösserungsstufe in Abhängigkeit der bestimmten Distanz zwischen Lasertracker und Zielpunkt bzw. Messhilfsmittel eingestellt werden kann. Mit diesen beiden Anpassungsfunktionen (Ausrichtung und Vergrösserung) kann die Kamera somit fortlaufend ein Bild erfassen, in dem das Messhilfsmittel und insbesondere die Lichtpunkte des Messhilfsmittels abgebildet sind. Dadurch entsteht ein elektronisch auswertbares, zweidimensionales Bild einer räumlichen Anordnung von Lichtpunkten.

Zur Auswertung des Bilds ist eine Bildverarbeitungseinheit vorgesehen. Damit kann eine Identifizierung der abgebildeten Lichtpunkte, eine Bestimmung der Schwerpunkte der abgebildeten Lichtpunkte und eine Bestimmung der Bildkoordinaten dieser Schwerpunkte, aus denen beispielsweise Raumwinkel zwischen der optischen Achse des Sensors, insbesondere der Erfassungsrichtung, und der Richtung vom Sensor zu den jeweiligen Lichtpunkten berechnet werden können, erfolgen.

Ein derartiges Koordinatenmessgerät mit einem Lasertracker und einer Bilderfassungseinheit für die Bestimmung von Position und Orientierung von Objekten im Raum, an denen Lichtpunkte und Reflektoren angeordnet sind, ist beispielsweise in der US 5,973,788 beschrieben.

Bei der Verwendung solcher Koordinatenmessgeräte werden am Objekt, dessen Position und Orientierung zu bestimmen ist, in relativ zum Objekt bekannten Positionen mindestens drei von der Bilderfassungseinheit registrierbare Lichtpunkte und mindestens ein den Messstrahl des Lasertrackers reflektierender Reflektor angeordnet. Die von der Bilderfassungseinheit zu registrierenden Lichtpunkte können aktive Lichtquellen (z. B. Leuchtdioden) sein oder zu beleuchtende Reflektoren, wobei die Lichtpunkte derart ausgestattet oder angeordnet sind, dass sie eindeutig voneinander unterscheidbar sind.

In der WO 2007/079600 A1 wird ein gattungsgemässes laserbasiertes Koordinatenmessgerät offenbart, bei welchem eine Lichtaustritts- und Lichtempfangsoptik der Distanzmessvorrichtung, eine Messkamera und eine Übersichtskamera auf einem gemeinsamen, bezüglich mindestens zweier Achsen drehbaren Element angeordnet sind und ein Laserstrahl mittels eines Lichtleiters von einem ausserhalb der Strahllenkeinheit angebrachten Lasermoduls in die Distanzmessvorrichtung eingekoppelt wird.

Nicht möglich mit solchen Koordinatenmessgeräten ist hingegen die Messung von Entfernungen ohne den Einsatz von einen Retroreflektor aufweisenden Messhilfsmitteln, d. h. ein Messen direkt zu einer Oberfläche eines zu vermessenden Objektes.

Dementsprechend ist auch ein Scannen einer Objektoberfläche nicht möglich: Zur Erfassung von Objekten oder Oberflächen werden häufig Verfahren verwendet, welche die Topographie einer Struktur, wie z. B. eines Bauwerks, sukzessive abtasten und dabei aufnehmen. Eine solche Topographie stellt dabei eine zusammenhängende und die Oberfläche des Objekts beschreibende Folge von Punkten oder aber ein entsprechendes Modell oder eine Beschreibung der Oberfläche dar. Ein gängiger Ansatz ist das Abtasten mittels eines Laserscanners, der jeweils die räumliche Position eines Oberflächenpunktes erfasst, indem durch den Laser die Entfernung zum angezielten Oberflächenpunkt gemessen und diese Messung mit den Winkelinformationen der Laseremission verknüpft werden. Aus diesen Entfernungs- und Winkelinformationen kann die räumliche Lage des erfassten Punktes bestimmt und die Oberfläche fortlaufend vermessen werden. In vielen Fällen wird parallel zu dieser rein geometrischen Erfassung der Oberfläche auch noch eine Bildaufnahme durch eine Kamera durchgeführt, welche neben der visuellen Gesamtansicht auch weitere Informationen, z. B. bzgl. der Oberflächentextur, bereitstellt. In der WO 97/40342 ein Verfahren beschrieben, welches durch ortsfest aufgestellte Scannersysteme eine Topographie aufnimmt. Daneben können scannende Funktionen in verschiedene andere Geräte als Zusatzfunktionen integriert werden. Aus der WO 2004/036145 ist beispielsweise ein geodätisches Messgerät bekannt, das von seiner Position aus innerhalb des erfassten Bereichs einen Laserstrahl zur Entfernungsmessung emittiert. Solche Messgeräte können ebenfalls zur abtastenden Erfassung von Oberflächen modifiziert bzw. ohne Modifikation betrieben werden. Ein Beispiel hierfür stellen motorisierte Theodoliten oder Totalstationen dar.

Zur Bereitstellung solcher ohne Retroreflektor verwendbaren Mess- und Scan-Funktionalitäten mit gattungsgemässen Koordinatenmessgeräten wie Lasertrackern sind aus dem Stand der Technik Lösungen mit Aufsatzmodulen bekannt. Beispielsweise offenbart das Dokument EP 2 620 745 A1 ein Vermessungssystem bestehend aus einem Koordinatenmessgerät, z. B. Lasertracker, und einem daran zu befestigenden Scanmodul.

Ein Messen von Entfernungen ohne Zuhilfenahme von Retroreflektoren ist beispielsweise auch mit den in der WO 2006/040263 A1 oder der EP 1 869 397 B1 beschriebenen Entfernungsmessgeräten möglich, bei welchen Distanzen mittels eines frequenzmodulierten Dauerstrichradars (frequency modulated continuous wave radar, FMCW) bzw. eines kohärenten Laserradars ermittelt werden. Bei diesen Lösungen fehlt es aber an einer Zielverfolgungsfunktionalität.

Diese Mehrkomponentenlösung ist aber zum einen produktionstechnisch aufwendig und zum anderen für den Benutzer unhandlich und unpraktisch. Es wäre daher vorteilhaft, ein Koordinatenmessgerät bereitzustellen, dass sowohl eine Zielverfolgungsfunktionalität für einen Retroreflektor aufweist, als auch die Möglichkeit, Entfernungen messhilfsmittelfrei - d. h. insbesondere ohne Retroreflektor - zu ermitteln So ein Messgerät wird in US-A1-2014/226145 offenbart.

Es ist daher Aufgabe der vorliegenden Erfindung, ein verbessertes Koordinatenmessgerät bereitzustellen, dass diese Funktionalitäten in einem Gerät vereint.

Weiterhin ist es eine Aufgabe, ein solches Koordinatenmessgerät bereitzustellen, bei welchem der konstruktive Aufbau weniger aufwendig und besser handhabbar gestaltet ist, insbesondere ohne die Notwendigkeit eines modularen Aufbaus des Koordinatenmessgerätes.

Eine weitere Aufgabe der Erfindung ist es, ein Vermessungsgerät nach dem Stand der Technik derart zu erweitern, dass dem Vermessungsgerät zusätzlich eine Scanfunktionalität bereitgestellt wird.

Diese Aufgaben werden durch die Verwirklichung der kennzeichnenden Merkmale der unabhängigen Ansprüche gelöst.

Die Erfindung betrifft zum einen ein Koordinatenmessgerät, das eine Strahllenkeinheit mit einem ersten und einem zweiten Entfernungsmesser aufweist, wobei die Messstrahlung des ersten Entfernungsmessers eine Zielverfolgung eines Retroreflektors ermöglicht, während die Messstrahlung des zweiten Entfernungsmessers ein Messen von Entfernungen zu streuend reflektierenden Oberflächen erlaubt.

Ein erster Aspekt der Erfindung betrifft dabei einen Lasertracker, bei dem der zweite Entfernungsmesser als ein WFD-Modul zum Ausführen eines Waveform-Digitizing-Prozesses ausgestaltet ist.

Ein solcher erfindungsgemässer Lasertracker zur Positionsbestimmung und insbesondere fortlaufenden Verfolgung eines als Retroreflektor ausgebildeten oder zumindest einen Retroreflektor aufweisenden Ziels weist mindestens eine Basis, eine Stütze, die um eine erste Drehachse drehbar auf der Basis befestigt ist, eine Strahllenkeinheit, die um eine zur ersten Drehachse im Wesentlichen orthogonale zweite Drehachse drehbar an der Stütze befestigt ist, Mittel zum Erfassen eines Drehwinkels der Stütze relativ zur Basis, und Mittel zum Erfassen eines Drehwinkels der Strahllenkeinheit relativ zur Stütze auf. Dabei weist die Strahllenkeinheit eine Laseraussende- und -empfangsoptik zum Aussenden von Messstrahlung und zum Empfangen von Messstrahlungsreflexionen, eine erste optische Distanzmesseinheit mit mindestens einem ersten Distanzmesser zur Messung der Distanz zu einem Retroreflektor des Messhilfsmittels mittels einer ersten Messstrahlung, und eine zweite optische Distanzmesseinheit aufweisend eine zweite Strahlquelle zur Emission einer zweiten Messstrahlung, einen Detektor und eine Steuerungs- und Verarbeitungseinheit zur Messung einer Distanz zu einer diffus streuenden Oberfläche eines Zielobjektes mittels der zweiten Messstrahlung auf.

Gemäss dem ersten Aspekt der Erfindung

- ist die zweite Strahlquelle dazu ausgestaltet, eine gepulste Lichtstrahlung, insbesondere einen Laserstrahl, als zweite Messstrahlung auszusenden,

- ist ein von der Oberfläche des Zielobjektes remittierter Anteil der zweiten Messstrahlung dem Detektor zuleitbar,

- ist der Detektor dazu ausgestaltet, mindestens einen Puls des remittierter Anteils der zweiten Messstrahlung zu erfassen, und

- ist die zweite optische Distanzmesseinheit dazu ausgestaltet, den erfassten Puls im Rahmen eines Waveform-Digitizing-Prozesses zu digitalisieren und basierend auf dem digitalisierten Puls eine Entfernung zur Oberfläche des Zielobjekts zu ermitteln.

In einer Ausführungsform des Lasertrackers gemäss dem ersten Erfindungsaspekt ist ein Teil der zweiten Messstrahlung als Referenzstrahl dem Detektor zuleitbar, insbesondere mittels eines im Strahlgang der zweiten Messstrahlung in der Strahllenkeinheit bereitgestellten ersten Strahlteilers.

In einer weiteren Ausführungsform des Lasertrackers gemäss dem ersten Erfindungsaspekt weist dieser eine Strahlempfangseinheit auf, die ausgestaltet ist, durch die Laseraussende- und -empfangsoptik in die Strahllenkeinheit eingetretene remittierte Strahlung zur zweiten optischen Distanzmesseinheit zu leiten, wobei die Strahlempfangseinheit einen Paraboloid-Spiegel mit einer parabolisch ausgestalteten Spiegeloberfläche aufweist, und der Paraboloid-Spiegel dazu ausgestaltet ist, auf der Spiegeloberfläche auftreffende remittierte Strahlung in einem Brennpunkt zu bündeln, und insbesondere dazu ausgestaltet ist, in einem Zentrum der Spiegeloberfläche auftreffende remittierte Strahlung in einem Winkel von 65° bis 75°, insbesondere 70°, zu reflektieren. Insbesondere ist dabei

- am Brennpunkt ein Einkopplungselement vorgesehen zum Einkoppeln der gebündelten remittierten Strahlung in einen Lichtwellenleiter, insbesondere wobei in dem Strahlgang zwischen dem Paraboloid-Spiegel und dem Einkopplungselement ein Umlenkelement bereitgestellt ist; und/oder
- der Paraboloid-Spiegel ausserhalb des gemeinsamen Strahlganges der ersten Messstrahlung und der zweiten Messstrahlung angeordnet, insbesondere wobei die Strahlempfangseinheit eine im gemeinsamen Strahlgang angeordnete Strahlteilungsvorrichtung aufweist, mittels welcher die remittierte Strahlung auf den Paraboloid-Spiegel gelenkt wird.

Ein Beispiel zum besseren Verständnis, das jedoch nicht Gegenstand der Ansprüche ist, betrifft einen Lasertracker, bei dem der zweite Entfernungsmesser als ein FMCW-Modul zum Ausführen einer Frequenzauswertung eines frequenzmodulierten Laserstrahl mit sich kontinuierlich verändernder Frequenz ausgestaltet ist.

Ein solcher Lasertracker zur Positionsbestimmung und insbesondere fortlaufenden Verfolgung eines als Retroreflektor ausgebildeten oder zumindest einen Retroreflektor aufweisenden Ziels weist mindestens eine Basis, eine Stütze, die um eine erste Drehachse drehbar auf der Basis befestigt ist, eine Strahllenkeinheit, die um eine zur ersten Drehachse im Wesentlichen orthogonale zweite Drehachse drehbar an der Stütze befestigt ist, Mittel zum Erfassen eines Drehwinkels der Stütze relativ zur Basis, und Mittel zum Erfassen eines Drehwinkels der Strahllenkeinheit relativ zur Stütze auf. Dabei weist die Strahllenkeinheit eine Laseraussende- und -empfangsoptik zum Aussenden von Messstrahlung und zum Empfangen von Messstrahlungsreflexionen, eine erste optische Distanzmesseinheit mit mindestens einem ersten Distanzmesser zur Messung der Distanz zu einem Retroreflektor des Messhilfs-mittel mittels einer ersten Messstrahlung, und eine zweite optische Distanzmesseinheit aufweisend eine zweite Strahlquelle zur Emission einer zweiten Messstrahlung, einen Detektor und eine Steuerungs- und Verarbeitungseinheit zur Messung einer Distanz zu einer diffus streuenden Oberfläche eines Zielobjektes mittels der zweiten Messstrahlung auf.

Gemäss diesem Beispiel

- weist die zweite Strahlquelle Ansteuermittel auf und ist dazu ausgestaltet, einen frequenzmodulierten Laserstrahl mit sich kontinuierlich verändernder Frequenz als zweite Messstrahlung zu erzeugen,
- ist ein Teil der zweiten Messstrahlung als Referenzstrahl abspaltbar, insbesondere mittels eines im Strahlgang der zweiten Messstrahlung in der Strahllenkeinheit bereitgestellten ersten Strahlteilers,
- ist ein von der Oberfläche des Zielobjektes remittierter Anteil der zweiten Messstrahlung dem Detektor zuleitbar, und
- ist die zweite optische Distanzmesseinheit dazu ausgestaltet, basierend auf einer Frequenzauswertung des Referenzstrahls und der Messstrahlungsreflexion eine Distanz zur Oberfläche des Zielobjekts zu ermitteln.

Insbesondere basiert das Ermitteln der Distanz auf dem Prinzip der Auswertung eines Phasenunterschieds zwischen der Frequenzmodulation des Referenzsignals und der Frequenzmodulation des remittierten Messstrahlungssignals.

In einer Ausführungsform des Lasertrackere gemäss diesem Beispiel weist die zweite optische Distanzmesseinheit einen Mischer auf, wobei der Referenzstrahl und die reflektierte Messstrahlungsreflexion dem Mischer zuleitbar sind, und der Mischer zur Durchführung eines homodynen oder heterodynen Mischverfahrens ausgestaltet ist. Dabei weist die zweite optische Distanzmesseinheit insbesondere einen dem Mischer nachgeordneten Tiefpassfilter auf.

In einer weiteren Ausführungsform des Lasertrackers gemäss diesem Beispiel weist die zweite optische Distanzmesseinheit ein optisches Bezugssystem mit einer ersten Lichtleitfaser, einer zweiten Lichtleitfaser und einem Referenzstrahldetektor auf, wobei die erste und die zweite Lichtleitfaser jeweils eine bekannte, voneinander unterschiedliche Länge aufweisen, und der Referenzstrahl ist dem optischen Bezugssystem zuleitbar. Die beiden Längen unterscheiden sich insbesondere in einem Verhältnis von mindestens 2:1 voneinander.

Ein weiteres Beispiel, das jedoch nicht Gegenstand der Ansprüche ist, betrifft einen Lasertracker, bei dem der erste oder zweite Entfernungsmesser für Distanzmessung mittels eines Frequenzkamms ausgestaltet ist.

Ein solcher Lasertracker zur Positionsbestimmung und insbesondere fortlaufenden Verfolgung eines als Retroreflektor ausgebildeten oder zumindest einen Retroreflektor aufweisenden Ziels weist mindestens eine Basis, eine Stütze, die um eine erste Drehachse drehbar auf der Basis befestigt ist, eine Strahllenkeinheit, die um eine zur ersten Drehachse im Wesentlichen orthogonale zweite Drehachse drehbar an der Stütze befestigt ist,

Mittel zum Erfassen eines Drehwinkels der Stütze relativ zur Basis, und Mittel zum Erfassen eines Drehwinkels der Strahllenkeinheit relativ zur Stütze auf. Dabei weist die Strahllenkeinheit eine Laseraussende- und -empfangsoptik zum Aussenden von Messstrahlung und zum Empfangen von Messstrahlungsreflexionen, eine erste optische Distanzmesseinheit mit mindestens einem ersten Distanzmesser zur Messung der Distanz zu einem Retroreflektor des Messhilfsmittel mittels einer ersten Messstrahlung, und eine zweite optische Distanzmesseinheit aufweisend eine zweite Strahlquelle zur Emission einer zweiten Messstrahlung, einen Detektor und eine Steuerungs- und Verarbeitungseinheit zur Messung einer Distanz zu einer diffus streuenden Oberfläche eines Zielobjektes mittels der zweiten Messstrahlung auf.

Gemäss dem weiteren Beispiel sind die erste optische Distanzmesseinheit und/oder die zweite optische Distanzmesseinheit für eine frequenzkammbasierte oder frequenzkammunterstützte Distanzmessung ausgestaltet.

Eine Ausführungsform des erfindungsgemässen Lasertrackers weist eine Abtastfunktionalität auf, im Rahmen derer der Lasertracker dazu ausgestaltet ist, mittels der zweiten Messstrahlung eine Vielzahl von Entfernungsmessungen zu einer Vielzahl von Messpunkten auf der Oberfläche des Messobjektes durchzuführen, wobei die Steuerungs- und Verarbeitungseinheit derart ausgebildet ist, dass für die Vielzahl der Entfernungsmessungen, die jeweils erfassten Drehwinkel mit der gemessenen Entfernung verknüpft werden, sodass durch die Verknüpfung jeweils eine Punkt-Position definiert ist, und eine eine Anzahl der Punkt-Positionen aufweisende Punktwolke erzeugbar ist.

Eine weitere Ausführungsform des erfindungsgemässen Lasertrackers weist eine Kalibrierungsfunktionalität zum Kalibrieren der ersten optischen Distanzmesseinheit und/oder der zweiten optischen Distanzmesseinheit auf, wobei die Steuerungs- und Verarbeitungseinheit derart ausgebildet ist, dass die erste Messstrahlung und die zweite Messstrahlung in zeitlichem Zusammenhang, insbesondere gleichzeitig, auf einen Retroreflektor emittierbar sind, und basierend auf einer durch die erste optische Distanzmesseinheit gemessenen ersten Distanz und einer durch die zweite optische Distanzmesseinheit gemessenen zweiten Distanz zu dem Retroreflektor die erste optische Distanzmesseinheit und/oder die zweite optische Distanzmesseinheit kalibrierbar sind.

In einer Ausführungsform des erfindungsgemässen Lasertrackers weist die Stahllenkeinheit einen positionssensitiven Detektor, insbesondere einen Tracking-Flächensensor, zum Erfassen der von einem Ziel reflektierten ersten oder zweiten Messstrahlung auf, sodass abhängig von einer Position der reflektierten ersten oder zweiten Messstrahlung auf dem Detektor die Ausrichtung der Messstrahlung für eine fortlaufende Zielverfolgung nachführbar ist, insbesondere wobei die Stahllenkeinheit ausserdem eine Lokalisierungskamera zur Groblokalisierung des Messhilfsmittels und/oder eine Übersichtskamera zur Bereitstellung von Bildern für einen Benutzer aufweist; die erste optische Distanzmesseinheit ein Interferometer und/oder einen Absolutdistanzmesser aufweist; die Stahllenkeinheit Umlenkmittel, insbesondere Strahlteiler, aufweist zum Erzeugen eines gemeinsamen Strahlganges der ersten Messstrahlung und der zweiten Messstrahlung in der Strahllenkeinheit, sodass die erste Messstrahlung und die zweite Messstrahlung durch dieselbe Laseraussende- und -empfangsoptik emittierbar sind; und/oder die Laseraussende- und -empfangsoptik als eine Laseraussendeoptik und eine von dieser separate Laserempfangsoptik ausgestaltet ist.

Die Erfindung betrifft ausserdem ein Verfahren zum Verwenden eines als WFD-Modul ausgebildeten zweiten Entfernungsmessers in einem Lasertracker.

Ein Verfahren zum Verwenden eines WFD-Moduls in einem Lasertracker zum Bereitstellen zusätzlicher Messfunktionalität, wobei der Lasertracker eine Strahllenkeinheit aufweist mit einer Laseraussende- und -empfangsoptik zum Aussenden von Messstrahlung und zum Empfangen von Messstrahlungsreflexionen, und eine optische Distanzmessvorrichtung mit mindestens einem ersten Distanzmesser zur Messung der Distanz zu einem Messhilfsmittel mittels einer ersten Messstrahlung, weist erfindungsgemäss auf:

- ein Erzeugen eines gepulsten Lichtstrahls, insbesondere Laserstrahls, als zweite Messstrahlung durch eine Strahlquelle des WFD-Moduls,
- ein Emittieren der zweiten Messstrahlung auf ein zu vermessendes Ziel, wobei ein Teil der zweiten Messstrahlung als Referenzstrahl dem Detektor zugeleitet wird, und ein anderer Teil der zweiten Messstrahlung durch die Laseraussende- und -empfangsoptik ausgesendet wird,
- eine von dem Ziel reflektierte und durch die Laseraussende- und -empfangsoptik empfangene Messstrahlungsreflexion der zweiten Messstrahlung dem Detektor zugeleitet wird,
- der Detektor Pulse des zugeleiteten Referenzstrahls und der zugeleiteten Messstrahlungsreflexion erfasst,
- die erfassten Pulse im Rahmen eines Waveform-Digitizing-Prozesses des WFD-Moduls digitalisiert werden, und
- basierend auf den digitalisierten Pulsen eine Entfernung zum Ziel ermittelt wird.

Ein Beispiel zum besseren Verständnis, das jedoch nicht Gegenstand der Ansprüche ist, betrifft ein Verfahren zum Verwenden eines FMCW-Moduls in einem Lasertracker zum Bereitstellen zusätzlicher Messfunktionalität, wobei der Lasertracker eine Strahllenkeinheit aufweist mit einer Laseraussende- und -empfangsoptik zum Aussenden von Messstrahlung und zum Empfangen von Messstrahlungsreflexionen, und eine optische Distanzmessvorrichtung mit mindestens einem ersten Distanzmesser zur Messung der Distanz zu einem Messhilfsmittel mittels einer ersten Messstrahlung, weist erfindungsgemäss auf:

- ein Erzeugen einer frequenzmodulierten Laserstrahls mit kontinuierlich veränderlicher Frequenz als zweite Messstrahlung durch eine Strahlquelle des FMCW-Moduls,
- ein Emittieren der zweiten Messstrahlung auf ein zu vermessendes Ziel, wobei ein Teil der zweiten Messstrahlung als Referenzstrahl abgespalten wird, und ein anderer Teil der zweiten Messstrahlung durch die Laseraussende- und -empfangsoptik ausgesendet wird,
- eine von dem Ziel remittierter und durch die Laseraussende- und -empfangsoptik empfangener Anteil der zweiten Messstrahlung einem Detektor des FMCW-Moduls zugeleitet wird, und
- basierend auf einer Frequenzauswertung des Referenzstrahls und remittierten Anteils der zweiten Messstrahlung eine Distanz zum Ziel ermittelt wird, insbesondere basierend auf dem Prinzip der Auswertung eines Phasenunterschieds zwischen der Frequenzmodulation des Referenzsignals und der Frequenzmodulation des remittierten Messstrahlungssignals.

In einer Ausführungsform eines erfindungsgemässen Verfahrens ist das zu vermessende Ziel eine diffus streuende Oberfläche eines Messobjektes, wobei

- die zweite Messstrahlung auf die diffus streuende Oberfläche emittiert wird,
- ein Anteil der zweiten Messstrahlung von der Oberfläche remittiert wird, und
- die Entfernung zur Oberfläche ermittelt wird.

In einer besonderen Ausführungsform dieses Verfahrens wird mittels der zweiten Messstrahlung eine Vielzahl von Entfernungsmessungen zu einer Vielzahl von Messpunkten auf der Oberfläche durchgeführt wird, wobei für die Vielzahl der Entfernungsmessungen eine aktuelle Ausrichtung der Strahllenkeinheit mit der jeweils gemessenen Entfernung verknüpft wird, sodass durch die Verknüpfung jeweils eine Punkt-Position definiert ist, und eine eine Anzahl der Punkt-Positionen aufweisende Punktwolke erzeugt wird.

In einer weiteren Ausführungsform eines erfindungsgemässen Verfahrens ist das zu vermessende Ziel ein Retroreflektor, insbesondere als Teil eines Messhilfsmittels, wobei die zweite Messstrahlung auf den Retroreflektor emittiert wird, die zweite Messstrahlung als Messstrahlungsreflexion von dem Retroreflektor reflektiert wird, und die Entfernung zum Retroreflektor ermittelt wird.

In einer besonderen Ausführungsform dieses Verfahrens werden die erste Messstrahlung und die zweite Messstrahlung auf den Retroreflektor emittiert, wobei eine mittels der ersten Messstrahlung gemessene Entfernung und eine mittels der zweiten Messstrahlung gemessene Entfernung zum Kalibrieren des ersten optischen Distanzmessers und/oder des WFD-Moduls verwendet werden, insbesondere wobei die erste Messstrahlung und die zweite Messstrahlung gleichzeitig emittiert werden.

Die Erfindung betrifft des weiteren ein Computerprogrammprodukt zum Durchführen von Verfahrensschritten eines erfindungsgemässen Verfahrens.

Ein Computerprogrammprodukt mit Programmcode, der auf einem maschinenlesbaren Träger gespeichert ist, ist erfindungsgemäss zur Steuerung bzw. Durchführung mindestens der folgenden Schritte des erfindungsgemässen Verfahrens zum Verwenden eines WFD-Moduls ausgebildet, insbesondere wenn das Programm auf einer als Steuerungs- und Verarbeitungseinheit eines Lasertrackers gemäss dem ersten Aspekt der Erfindung ausgebildeten elektronischen Datenverarbeitungseinheit ausgeführt wird:

- Digitalisieren der erfassten Pulse und
- Ermitteln der Distanz zum Ziel.

Ein Beispiel zum besseren Verständnis, das jedoch nicht Gegenstand der Ansprüche ist, betrifft ein Computerprogrammprodukt mit Programmcode, der auf einem maschinenlesbaren Träger gespeichert ist, ist erfindungsgemäss zur Steuerung bzw. Durchführung mindestens der folgenden Schritte des erfindungsgemässen Verfahrens zum Verwenden eines FMCW-Moduls ausgebildet, insbesondere wenn das Programm auf einer als Steuerungs- und Verarbeitungseinheit eines Lasertrackers gemäss dem zweiten Aspekt der Erfindung ausgebildeten elektronischen Datenverarbeitungseinheit ausgeführt wird:

- Emittieren der zweiten Messstrahlung, und
- Ermitteln der Distanz zum Ziel basierend auf einer Frequenzauswertung des Referenzstrahls und des remittierten Anteils der zweiten Messstrahlung.

Der erfindungsgemässe Lasertracker und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1    einen erfindungsgemässen Lasertracker beim Messen einer Entfernung zu einem Messhilfsmittel;

Fig. 2    einen erfindungsgemässen Lasertracker beim Messen der Entfernung zu einem Messobjekt mittels eines WFD-Moduls;

Fig. 3    einen erfindungsgemässen Lasertracker in einer Frontalansicht;

Fig. 4    eine Ausführungsform des erfindungsgemässen Lasertrackers beim Abtasten eines Messobjekts im Rahmen einer Scanfunktionalität des WFD-Moduls;

Fig. 5    einen optischen Aufbau eines Lasertrackers des Standes der Technik;

Fig. 6a-b      eine erste Ausführungsform eines optischen Aufbaus eines erfindungsgemässen Lasertrackers mit einem WFD-Modul;

Fig. 7a-b      zwei Ausführungsformen einer Strahlempfangseinheit des WFD-Moduls;

Fig. 8      Komponenten einer Ausführungsform einer Strahlempfangseinheit mit einem Paraboloid-Spiegel in einer räumlichen Ansicht;

Fig. 9      eine zweite Ausführungsform eines optischen Aufbaus eines erfindungsgemässen Lasertrackers mit einem WFD-Modul;

Fig. 10      die Ausführungsform aus Fig. 9 beim gleichzeitigen Messen einer Entfernung zu einem Retroreflektor mit dem WFD-Modul und weiteren Entfernungsmessern;

Fig. 11      Beispiel eines optischen Aufbaus eines Lasertrackers mit einem FMCW-Modul;

Fig. 12      Beispiel eines optischen Aufbaus eines Lasertrackers mit einem FMCW-Modul; und

Fig. 13      einen optischen Aufbau einer frequenzkammbasierten Entfernungsmesseinheit.

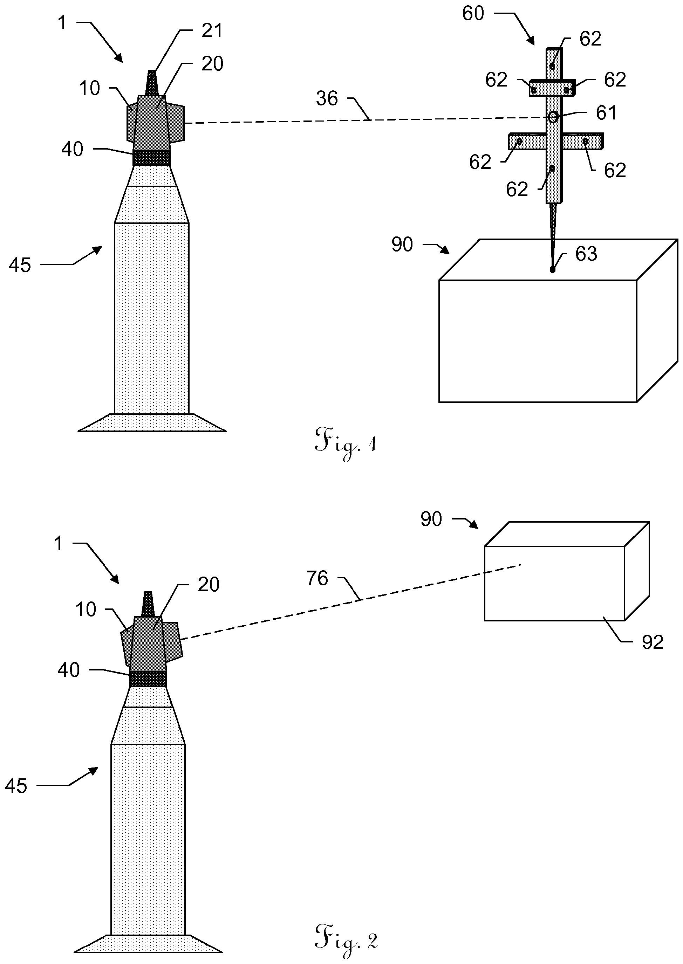

Figur 1 zeigt eine beispielhafte Ausführungsform eines erfindungsgemässen als ein Lasertracker 1 ausgestalteten Koordinatenmessgerätes. Der gezeigte Lasertracker 1 weist eine Basis 40, eine darauf angebrachte Stütze 20 mit einem Griff 21 und eine an zwei Holmen der Stütze 20 gelagerte Strahllenkeinheit 10 auf. Der Lasertracker 1 ist auf einem Stativ 45 angeordnet, weist mindestens einen ersten Entfernungsmesser - insbesondere einen Absolutdistanzmesser (ADM) oder ein Interferometer - auf (hier nicht dargestellt) und misst mittels eines Laserstrahles 36 die Distanz zu einem auf einem Messhilfsmittel 60 befindlichen Retroreflektor 61. Das Messhilfsmittel 60 - hier beispielhaft als Messtaster ausgeführt - umfasst weiterhin eine Anzahl Zielmarkierungen 62, beispielsweise in Form von reflektierenden oder selbstleuchtenden Lichtpunkten, sowie einen Messkopf 63 zum Plazieren auf einem zu vermessenden Zielpunkt eines Zielobjektes 90.

Der Lasertracker 1 weist optional eine Messkamera auf, die insbesondere als fokussierbares Kamerasystem mit variabler Vergrösserung ausgestaltet sein kann, um die auf dem Messhilfsmittel 60 angeordneten Zielmarkierungen 62 zu erfassen. Anhand der von der Messkamera aufgenommenen Positionen der Zielmarkierungen 62 ist die räumliche Ausrichtung des Messhilfsmittels 60 bestimmbar.

Ein mit einer solchen Messkamera verwendbares Verfahren zum fortlaufenden Bestimmen der räumlichen Lage eines mehrere Zielmarkierungen 62 in fixer, bekannter räumlicher Verteilung relativ zueinander aufweisenden Messhilfsmittels 60 ist in der EP 2 557 391 A1 beschrieben: Im Rahmen dieses Verfahrens erfolgt ein fortlaufendes Erfassen von Kamera-Bildern von den Zielmarkierungen 62 mit einer Messkamera mit einem eine Vielzahl von Pixeln aufweisenden Flächensensor sowie ein fortlaufendes Durchführen von Auslesedurchgängen, bei welchen die Pixel hinsichtlich eines jeweils aktuellen Belichtungswerts ausgelesen werden. Ferner werden Bild-Positionen von den abgebildeten Zielmarkierungen 62 im jeweils aktuellen Kamera-Bild bestimmt und die jeweils aktuelle räumliche Lage des Messhilfsmittels 60 basierend darauf abgeleitet. Dabei werden fortlaufend jeweils aktuelle Interessens-Bereiche auf dem Flächensensor abhängig von einer Sammlung von in mindestens einem vorgängig erfassten Kamera-Bild bestimmten Bild-Positionen gesetzt. Das Bestimmen der aktuellen Bild-Positionen erfolgt dann ausschliesslich unter Berücksichtigung von nur jenen aktuellen Belichtungswerten, die von innerhalb von den aktuell gesetzten Interessens-Bereichen liegenden Pixeln des Flächensensors erhalten sind.

Um Bewegungen des Messhilfsmittels 60 zu erkennen und nachvollziehen zu können, sodass der Laserstrahl 36 auf den Retroreflektor 61 ausgerichtet bleibt, weist der Lasertracker 1 einen positionssensitiven Detektor (PSD) auf, insbesondere einen Tracking-Flächensensor, wie er beispielsweise in der WO 2007/079600 A1 geoffenbart ist.

Der PSD ist vorzugsweise in der Strahllenkeinheit 10 angeordnet und ermöglicht durch ein Erfassen der Ausrichtung des von einem Ziel, insbesondere dem Retroreflektor 61, reflektierten Laserstrahls 30 das Nachführen der Ausrichtung des Laserstrahls 30. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden.

Erfindungsgemäss weist der Lasertracker zusätzlich eine Entfernungsmessfunktionalität auf, die das Messen einer Entfernung zu einer Oberfläche 92 des Messobjekts 90 ermöglicht. Dies ist in Figur 2 gezeigt.

Figur 2 zeigt den Lasertracker aus Figur 1 beim Messen einer Entfernung zum Messobjekt 90 mittels eines WFD-Messstrahls 76. Die Entfernung wird mittels eines erfindungsgemäss in Strahllenkeinheit 10 vorgesehenen Wave-Form-Digitizing-Modul (WFD-Modul; hier nicht dargestellt) gemessen. Dieses Verfahren erlaubt Entfernungsmessungen ohne Verwendung eines Messhilfsmittels 60 oder eines Retroreflektors.

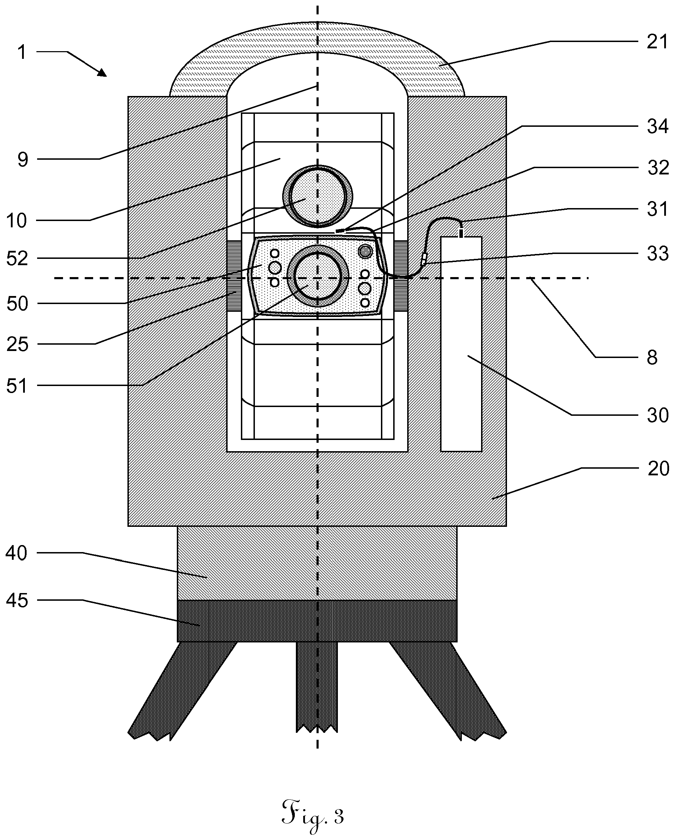

Figur 3 zeigt eine beispielhafte Ausführungsform eines erfindungsgemässen Lasertrackers 1 in einer Frontalansicht. Der Lasertracker 1 umfasst eine Basis 40, die auf einer Haltevorrichtung befestigbar ist, hier dargestellt in Form eines Stativs 45. Auf der Basis 40 ist eine Stütze 20 um die Vertikalachse 9 drehbar gelagert angebracht. Die Stütze 20 umfasst einen ersten und einen zweiten Holm, die von einem unteren Teil der Stütze 20 aus nach oben ragen und an welchen eine Strahllenkeinheit 10 mittels einer Welle 25 um die Horizontalachse 8 kippbar gelagert ist. An den beiden Holmen ist oben ein Griff 21 für den Transport und die Handhabung des Lasertrackers 1 durch einen Benutzer angebracht.

Sowohl die Lagerung der Stütze 20 an der Basis 40 als auch die Lagerung der Strahllenkeinheit 10 an der Stütze 20 ist vorzugsweise als ein Fest-Los-Lager ausgeführt. Achsfehler infolge von Temperatureinflüssen und die daraus resultierenden Genauigkeitsverluste werden so minimiert. Ausserdem ist eine temperaturbedingte Ausdehnung der Welle 25 unkritisch und beeinflusst eine Verspannung des Lagers nicht. Die Verspannung der Lager bleibt dadurch über den gesamten Temperatureinsatzbereich konstant.

Der Griff 21 kann insbesondere fest mit den beiden Holmen verbunden sein, beispielsweise aus einem Guss mit diesen hergestellt, angeschweißt, angeklebt oder angeschraubt sein, so dass er als zusätzlich stabilisierendes Element für die Holme dient, insbesondere hinsichtlich eines Verbiegens. Vorteilhaft kann der Griff 21 derart geformt sein, dass er eine exakt nach oben gerichtete Messung, d. h. entlang der Vertikalachse 9, mittels des Laserstrahles erlaubt. Alternativ kann der Griff 21 an der entsprechenden Stelle auch eine Öffnung für einen Durchtritt des Laserstrahls aufweisen.

An der Strahllenkeinheit 10 sind mehrere Optiken vorgesehen, darunter eine Optik 52 einer Messkamera sowie ein Objektivmodul 50 für die Zielverfolgungsfunktionalität mit einer Laseraussende- und -empfangsoptik 51 einer optischen Distanzmessvorrichtung. Des weiteren weist die Strahllenkeinheit 10 vorzugsweise eine Optik einer Lokalisierungskamera zur Groblokalisierung des Messhilfsmittels und eine Optik einer Übersichtskamera zur Bereitstellung von Bildern für einen Benutzer auf.

In die Stütze 20, bzw. in einen der Holme ist ein Lasermodul 30 integriert, vorzugsweise ein Helium-Neon-Lasermodul (HeNe-Lasermodul). Besonders vorteilhafte Ausführungsformen eines verwendbaren Lasermoduls 30 sind auch in der CH 706 633 A2 geoffenbart.

Ein eine erste Faser 31 und eine zweite Faser 32 aufweisendes Lichtleitersystem führt von diesem Lasermodul 30 durch die Welle 25 hindurch in die Strahllenkeinheit 10 bis zu einem Kollimator 34 einer (hier nicht dargestellten) Distanzmessvorrichtung, insbesondere eines Interferometers. Dabei ist die in der Stütze 20 verlaufende erste Faser 31 des Lichtleitersystems über eine vorzugsweise in der Stütze 20 vorgesehene Steckerverbindung 33 mit der in der Strahllenkeinheit 10 verlaufenden zweiten Faser 32 des Lichtleitersystems verdrehungsfrei verbunden. Die Steckerverbindung 33 in der Nähe des Lasermoduls 30 in der Stütze 20 anzuordnen hat den Vorteil, dass das Lasermodul 30 mitsamt der ersten Faser 31 leichter austauschbar ist. Vorzugsweise ist das Lichtleitersystem polarisationserhaltend, und/oder die erste und die zweite Faser 31,32 sind Single-Mode-Fasern.

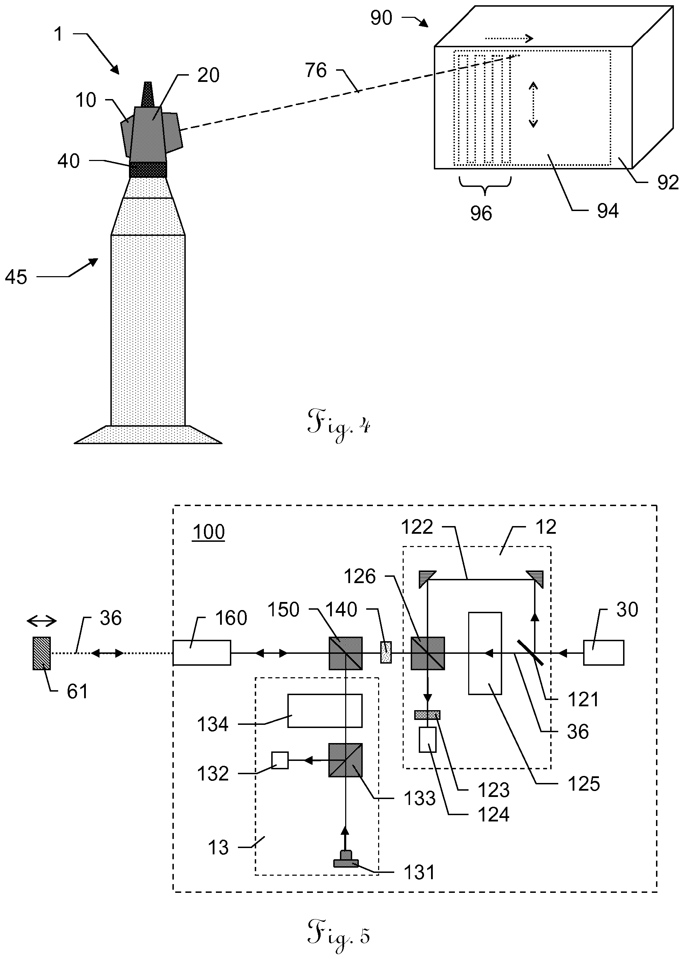

In der Figur 4 ist eine Ausführungsform des erfindungsgemässen Lasertrackers 1 gezeigt, bei welcher mit dem WFD-Modul eine Scanfunktionalität ausführbar ist. Dabei wird auf einer Scanfläche 94 einer Oberfläche 92 des Messobjektes 90 eine Vielzahl von Messpunkten nacheinander von der Strahllenkeinheit 10 angezielt, wobei jeweils eine Entfernung ermittelt wird und mit Winkeldaten verknüpft wird, sodass für jeden der Messpunkte eine Position ermittelt werden kann. Das Anzielen der Punkte kann, wie hier dargestellt, durch ein Abfahren der Scanfläche 94 in einem regelmässigen Muster 96 erfolgen, z. B. in parallelen Bahnen mit einem definierten Abstand zueinander. Die ermittelten Positionen der Messpunkte können dann zu einer Punktwolke zusammengefügt werden.

Figur 5 zeigt einen beispielhaften optischen Aufbau 100 eines Lasertrackers nach dem Stand der Technik, wie er beispielsweise in der EP 2 634 594 A1 beschrieben ist. Er weist eine Funktionalität zur Überprüfung von Messungen von Entfernungsänderungen auf, welche mit einem Interferometer 12 ausgeführt werden. Ausserdem weist der Aufbau 100 eine Strahlquelle 30, z. B. eine HeNe-Laserstrahlquelle oder eine Laserdiode, und einen Absolutdistanzmesser 13 (ADM) mit einer weiteren Strahlquelle 131, z. B. einer Laserdiode oder einer SLED (Superluminescent LED), auf.

Der von der Strahlquelle 131 des ADM ausgehende Lichtstrahl wird auf einen polarisierenden Strahlteiler 133 und von dort durch einen elektrooptischen Modulator 134 zu einem wellenlängenabhängigen Strahlteiler 150 geführt. Ein derartiger Strahlteiler mit wellenlängenabhängiger Strahlteilung wird insbesondere bei unterschiedlichen Emissionswellenlängen der beiden Lichtquellen 30,131 eingesetzt. Das rückkehrende Licht wird im ADM 13 durch den polarisierenden Strahlteiler 133 auf einen ADM-Detektor 132 geführt. Insbesondere sind in diesem Zusammenhang auch andere ADM-Anordnungen und Verfahren verwendbar, bei denen sich der Messlichtstrahl durch beispielsweise den wellenlängenabhängigen Strahlteiler 150 ein- und auskoppeln lässt. Beispiele für einen solchen Distanzmesser sind in der WO 03/062744 A1 und der WO 2009/103172 A1, beschrieben. Grundsätzlich sind hier wie in den anderen Ausführungsformen der Erfindung auch andere Typen von ADM, wie z. B. Phasenmesser oder nach dem Fizeau-Prinzip arbeitende Distanzmesser, einsetzbar.

Das Interferometer 12 verwendet von der Strahlquelle 30 erzeugtes Licht. In der gezeigten Ausführungsform ist diese Quelle 30 direkt dem Aufbau 100 zugeordnet, wobei diese beispielsweise eine longitudinal monomodige Laserstrahlung mit grosser Kohärenzlänge (single frequency) erzeugt. In einer alternativen Ausführung kann die Strahlquelle 30 einer anderen Komponente des Messgeräts zugeordnet sein, wobei die Strahlung mittels eines Lichtleiters in das Interferometer 12 eingekoppelt wird. Die erzeugte Laserstrahlung wird durch einen Strahlteiler 121 in eine Referenzstrahlung 122 auf einem Referenzlichtpfad und in eine Messstrahlung 36 auf einem Messlichtpfad aufgeteilt. Der Messlichtpfad führt durch einen akustooptischen Modulator 125 und trifft zusammen mit dem Referenzlichtpfad auf einen polarisierenden Strahlteiler 126. Der polarisierende Strahlteiler 126 leitet die Messstrahlung 36 weiter zum wellenlängenabhängigen Strahlteiler 150, und lenkt das rückkehrende Messlicht zusammen mit dem Referenzlicht über einen Polarisationsfilter 123 zu einem Interferometerdetektor 124. Die Wirkungsweise eines solchen Interferometers 12 ist grundsätzlich bekannt und basiert auf dem Welleninterferenzprinzip. Es sind insbesondere auch andere Interferometeranordnungen und Verfahren verwendbar, bei denen sich die Messstrahlung durch beispielsweise den wellenlängenabhängigen Strahlteiler 150 ein- und auskoppeln lässt. Ein Beispiel für ein solches Interferometer ist in der WO 03/062744 A1 beschrieben. Grundsätzlich sind auch andere Typen von Interferometern (z. B. Michelson mit Quadraturdetektion) einsetzbar.

Am Interferometerdetektor 124 wird eine Überlagerung der Referenzstrahlung 122 mit der an einem beweglichen Ziel 61 reflektierten und auf den Interferometerdetektor 124 geführten Messstrahlung 36 detektiert. Dabei kann die Intensität der bei der Überlagerung der beiden Strahlungen 36,122 entstehenden Interferenz fortlaufend (als Interferometerausgangsgrösse) erfasst werden. Das Ableiten der Interferometerausgangsgrösse basiert hierbei zumindest auf der erfassten Überlagerung, wobei die Interferometerausgangsgrösse von einer Entfernung zum Ziel abhängt.

Befindet sich das Ziel 61 in einer konstanten Entfernung zum optischen Aufbau 100 bzw. zum Interferometerdetektor 124, so ist der während der beibehaltenen festen Entfernung zum Ziel 61 gemessene Intensitätswert konstant. Mit einer bezüglich einer durch die Messstrahlung 36 definierten optischen Achse relative Bewegung des Ziels 61 zum optischen Aufbau 100 (bzw. mit einer Bewegung des Aufbaus) verändert sich die Entfernung zwischen den beiden Komponenten 100,61, damit ein Gangunterschied zwischen der Referenzstrahlung 122 und der Messstrahlung 36 und dadurch die am Interferometerdetektor 124 messbare Intensität in Abhängigkeit der Entfernungsänderung. Mittels des Interferometerdetektors 124 können diese Intensitätsvariationen, insbesondere zeitaufgelöst, gemessen und erfasst (als Ausgangsgrössenverlauf) und für die Überprüfung der Richtigkeit einer solchen Entfernungsänderungsmessung ausgelesen und weiterverarbeitet werden. Das Erzeugen des zeitaufgelösten Ausgangsgrössenverlaufs erfolgt aus der abgeleiteten Interferometerausgangsgrösse, wobei ein Ermitteln der Entfernungsänderung basierend auf dem Ausgangsgrössenverlauf erfolgt.

Zur Überprüfung der Richtigkeit einer solchen Messung wird ein Bewegungsparameter aus den mit dem Interferometerdetektor 124 erfassten Intensitäten fortlaufend abgeleitet und dieser Parameter fortlaufend mit einem Bewegungskriterium verglichen. In Abhängigkeit des Vergleichs wird dann eine Information hinsichtlich der Verlässlichkeit der durchgeführten Messung ausgegeben.

Der optische Aufbau 100 weist weiter eine λ/4-Platte 140 und eine Komponente 160 auf, welche Licht, das entlang einer vom Absolutdistanzmesser 13 und dem Interferometer 12 gemeinsamen genutzten optischen Achse von aussen in den Aufbau 100 einfällt, auftrennen und einen ersten Teil dieses Lichtes zu einer Übersichtskamera (nicht dargestellt) und einen zweiten zu einem Positionswandler (nicht dargestellt) auskoppelt. Die Übersichtskamera kann eine eigene Optik und zusätzlich einen Bildwandler aufweisen. Die Übersichtskamera weist dabei typischerweise einen Öffnungswinkel von rund 10° und eine Brennweite von beispielsweise 30 bis 50mm auf und dient zur Groblokalisierung von Messzielen.

Zur Erfassung von reflektierenden Zielen kann der Aufbau 100 zudem vorzugsweise eine Reflektorbeleuchtung mit einer bestimmten Beleuchtungswellenlänge aufweisen, welche einen Winkelbereich beleuchtet, der vorzugsweise mindestens so gross ist, wie der Öffnungswinkel der Übersichtskamera.

Eine Auswertungselektronik und/oder Auswertungssoftware der Übersichtskamera detektiert dann beispielsweise einen oder mehrere helle Lichtpunkte im Sichtbereich der Übersichtskamera, welche jeweils einem reflektierenden Ziel entsprechen. Daraus kann deren Position im Bild der Übersichtskamera und daraus wiederum eine Änderung der Ausrichtung des Ziels, z. B. eines Messhilfsinstruments (z. B. Taster oder Scanner), ermittelt werden, womit das Messgerät bzw. der optische Aufbau 100 und die Lichtstrahlen des oder der Distanzmesser 12,13 auf das Ziel ausrichtbar sind. Damit sind somit eine automatische Zielerfassung und ein "Lock-on", d. h. eine fortlaufende Verfolgung des Ziels, der Distanzmesser 12,13 auf ein Ziel realisierbar.

Der Lichtanteil für den Positionswandler ist typischerweise ein Strahlenbündel von zurückkehrendem Licht, welches von einem der Distanzmesser 12,13, vorzugsweise von der Interferometeranordnung 12, ausgesendet wurde. Der Positionswandler kann eine eigene Optik und beispielsweise einen positionssensitiven Detektor (Tracking-Flächensensor, insbesondere PSD oder CCD) aufweisen, wobei am Ziel reflektierte Messlaserstrahlung auf diesem detektiert werden kann.

Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell (Nanosekundenbereich) und mit einer Sub-Nanometer-Auflösung erfolgen.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d. h. korrespondierend zum Strahldurchmesser des Messlaserstrahls, gewählt. Eine Erfassung mit der PSD erfolgt koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierende Ziel ausgerichtet worden ist (zumindest grob, d. h. derart, dass das Ziel innerhalb des Messlaser-Kegels liegt).

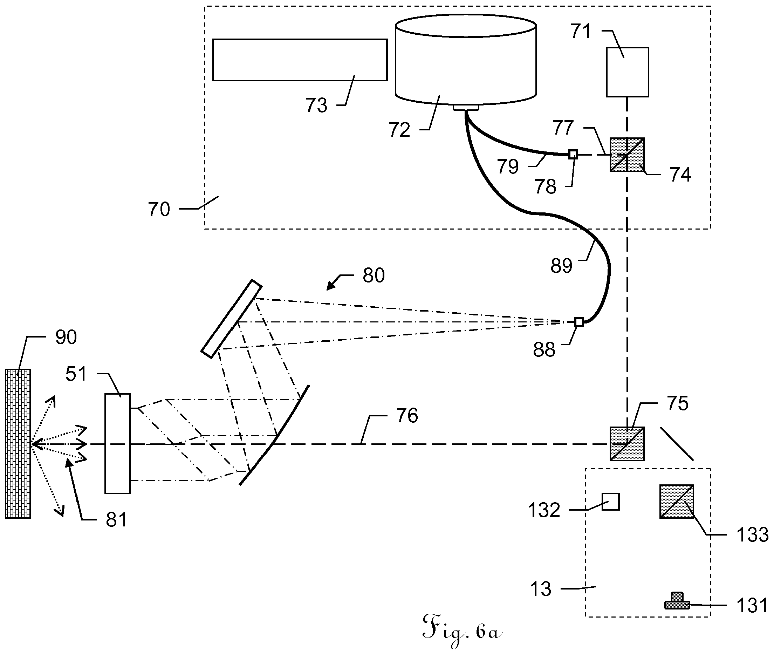

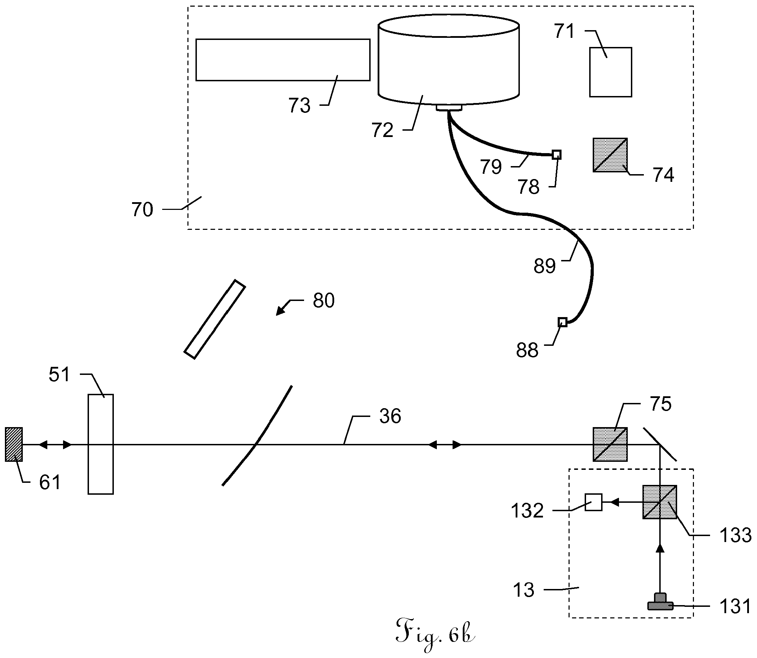

Ein beispielhafter optischer Aufbau eines erfindungsgemässen Lasertrackers mit einem Absolutdistanzmesser 13 (ADM) und einem erfindungsgemässen Wave-Form-Digitizing-Modul (WFD-Modul 70) ist in den Figuren 6a und 6b gezeigt. Dabei zeigt Figur 6a eine Entfernungsmessung zu einem Messobjekt 90 mit dem erfindungsgemässen WFD-Modul 70, und Figur 6b eine Entfernungsmessung zu einem Retroreflektor 61 mittels eines ADM 13, wie er in Figur 5 beschrieben wurde.

Das WFD-Modul 70 ist gemeinsam mit dem ADM 13 in der Strahllenkeinheit des Lasertrackers verbaut und verwendet dieselbe Laseraussende- und -empfangsoptik 51 wie der ADM 13. Das WFD-Modul 70 weist eine Strahlquelle 71 zur Erzeugung eines gepulsten Lichtstrahls, insbesondere Laserstrahls, (WFD-Strahl 76) auf. Der Messpulse aufweisende WFD-Strahl 76 wird zunächst auf einen ersten Strahlteiler 74 geleitet, wodurch ein dieselben Messpulse wie der WFD-Strahl 76 aufweisender Referenzstrahl 77 abgespalten wird, der auf ein Referenzstrahl-Einkopplungselement 78 geleitet wird, das den Referenzstrahl 77 in einen ersten Lichtwellenleiter 79 einkoppelt, der zum Detektor 72 des WFD-Moduls 70 führt.

Der andere Teil des WFD-Strahls 76 wird über einen zweiten Strahlteiler 75 in den gemeinsamen Strahlgang mit der Messstrahlung des ADM 13 eingekoppelt und durch die Laseraussende- und -empfangsoptik 51 auf das zu vermessende Messobjekt 90 gelenkt. Ein von der diffus streuenden Oberfläche des Messobjekts 90 remittierte Anteil 81 des WFD-Strahls 76 gelangt durch die Laseraussende- und - empfangsoptik 51 wieder in die Strahllenkeinheit. Die remittierte Strahlung 81 weist den Messpulsen entsprechende, aber - entsprechend der Distanz zum Ziel - zeitversetzte Zielpulse auf. In der Strahllenkeinheit wird die remittierte Strahlung 81 von einer Strahlempfangseinheit 80 gebündelt und auf eine Einkoppelungseinheit 88 gelenkt, die die remittierte Strahlung 81 in einen zweiten Lichtwellenleiter 89 einkoppelt, der zum Detektor 72 des WFD-Moduls 70 führt. Von diesem werden der remittierte Anteil 81 des WFD-Strahls 76 und der Referenzstrahl 77 erfasst. Auf bekannte, als Waveform Digitizing bezeichnete Art und Weise werden die Pulse der remittierten Strahlung 81 und des Referenzstrahls 77 digitalisiert. Die so digitalisierten Messpulse und Zielpulse werden miteinander verglichen, insbesondere der zeitliche Abstand zwischen diesen, und so durch eine Recheneinheit 73 die Entfernung zum Messobjekt 90 ermittelt.

Der WFD-Strahl 70 weist mindestens einen Abtastungslichtpuls (WFD-Puls) auf, der so moduliert ist, dass dessen vom Zielobjekt zurückkommender Anteil zum Ausgewertetwerden nach der Wellenformdigitalisierungsmethode (WFD-Methode) - mit zeitlicher Abtastung des zurückkommenden Pulses - vorgesehen ist (also abtast- und auswertbar ist nach der WFD-Methode), und mindestens einen Phasenvergleichs-Lichtsignalzug, der so moduliert ist, dass dessen vom Zielobjekt zurückkommender Anteil zum Ausgewertetwerden nach der Phasenvergleichsmethode vorgesehen ist.

Im Rahmen des Detektierens kann dann eine Signalabtastung zur Identifikation und Bestimmung einer zeitlichen Lage des zurückkommenden Anteils des Abtastungslichtpulses erfolgen, sowie - parallel dazu - ein Auswerten des detektierten zurückkommenden Anteils des Phasenvergleichs-Lichtsignalzugs nach der Phasenvergleichsmethode.

Das Waveform Digitizing (WFD) basiert auf der Kombination von zwei in der Entfernungsmessung üblichen Grundprinzipien zur Signaldetektion. Das erste Grundprinzip basiert auf der Messsignaldetektion anhand der Schwellwertmethode und das zweite Grundprinzip auf der Signalabtastung mit nachgeschalteter Signalverarbeitung zur Identifikation und zeitlichen Lagebestimmung des Signals. Die Laufzeit und damit die Distanz zwischen einem von der Emissionseinheit 71 ausgesandten Messpuls und einem Zielpuls (vom Zielobjekt 90 reflektierter und vom Detektor 72 detektierter Messpuls) folgen beispielsweise aus dem zeitlichen Abstand der Scheitelpunkte der beiden Pulse, wobei die Pulse ähnlich wie bei Phasenmessern abgetastet werden.

Vorteilhaft sind auch Distanzen zu weiter entfernten Zielen ermittelbar als mit den in Figur 5 gezeigten Entfernungsmessern.

Figur 6b zeigt eine Entfernungsmessung zu einem Retroreflektor 61 (z. B. als Teil eines Messhilfsmittels) mittels des ADM 13 des erfindungsgemässen Koordinatenmessgerätes. Eine beispielhafte Funktionsweise eines solchen ADM 13 wurde bereits mit Bezug zu Figur 5 beschrieben.

In der hier gezeigten Ausführungsform wird die von der Strahlquelle 131 des ADM 13 ausgehende Messstrahlung 36 auf einen polarisierenden Strahlteiler 133 und von dort über einen zweiten Strahlteiler 75 in den gemeinsamen Strahlgang mit dem WFD-Strahl geführt und so durch die Laseraussende- und -empfangsoptik 51 auf den Retroreflektor 61 gelenkt. Das auf demselben Weg zurückkehrende Licht wird im ADM 13 durch den polarisierenden Strahlteiler 133 auf einen ADM-Detektor 132 geführt. Grundsätzlich sind auch andere Typen von ADM, wie z. B. Phasenmesser oder nach dem Fizeau-Prinzip arbeitende Distanzmesser, einsetzbar.

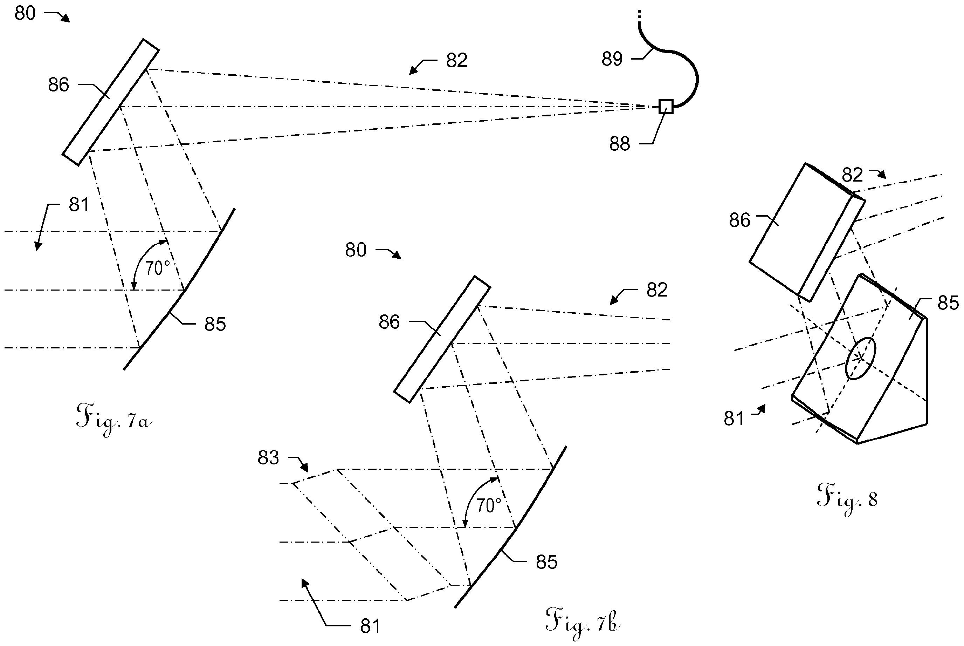

In den Figuren 7a, 7b und 8 wird die Strahlempfangseinheit 80 detaillierter dargestellt. Figur 7a zeigt eine erste Ausführungsform der Strahlempfangseinheit 80. Dabei wird der durch die Laseraussende- und -empfangsoptik in die Strahllenkeinheit gelangte remittierte Anteil 81 der WFD-Strahlung auf einen parabolisch geformten Spiegel 85 gelenkt, vom dem die remittierte Strahlung 81 in einem Winkel von etwa 70° (insbesondere zwischen etwa 65° und etwa 75°) gebündelt reflektiert und als gebündeltes Licht 82 über einen planen Spiegel 86 auf eine im Brennpunkt befindliche Einkoppelungseinheit 88 geführt wird, wo das gebündelte Licht 82 in den zweiten Lichtwellenleiter 89 eingekoppelt wird, sodass das Licht zum Entfernungsmesser des WFD-Moduls geleitet werden kann.

Die in Figur 7b gezeigte zweite Ausführungsform der Strahlempfangseinheit 80 weist eine Strahlteilungsvorrichtung 83 auf, mittels welcher die remittierte Strahlung 81 aus dem Strahlgang der Messstrahlung herausgeführt wird, so dass der parabolische Spiegel 85 sich selbst nicht im Strahlgang befindet und vorteilhaft völlig undurchlässig für die Messstrahlen sein kann.

Durch die in den Figuren 7a-b dargestellten Konfigurationen der Strahlempfangseinheit 80 ist diese besonders platzsparend in der Strahllenkeinheit positionierbar.

In Figur 8 ist eine beispielhafte Ausführungsform des Paraboloid-Spiegels 85 in einer räumlichen Ansicht gezeigt. Von der parabolisch geformten Spiegeloberfläche wird die remittierte Strahlung 81 gebündelt in Richtung des planaren Spiegels reflektiert.

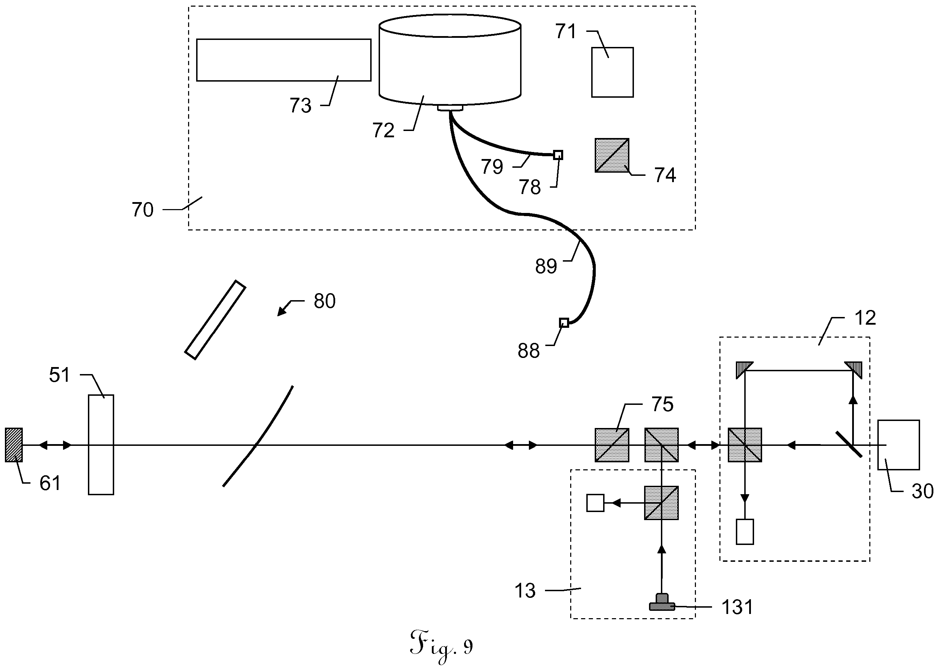

Figur 9 zeigt eine zweite Ausführungsform eines optischen Aufbaus eines erfindungsgemässen Lasertrackers. Im Gegensatz zu der in den Figuren 6a und 6b gezeigten Aufbaus weist der hier dargestellte zusätzlich ein Interferometer 12 auf, wie es mit Bezug zu Figur 5 beschrieben wurde. Dargestellt ist ein gleichzeitiges Entfernungsmessen mittels des ADM 13 und dem Interferometer 12 zu einem Retroreflektor 61. Das WFD-Modul 70 wird hier nicht verwendet, da die anderen Entfernungsmesser 12,13 jeweils genauere Ergebnisse liefern. Gleichwohl kann das WFD-Modul 70 auch zum Messen einer Entfernung zu einem Retroreflektor 61 eingesetzt werden. Vorteilhaft ist dabei insbesondere die Möglichkeit, mit der WFD-Strahlung 76 Entfernungen über grössere Distanzen zu vermessen, als mit dem ADM 13 oder dem Interferometer 12.

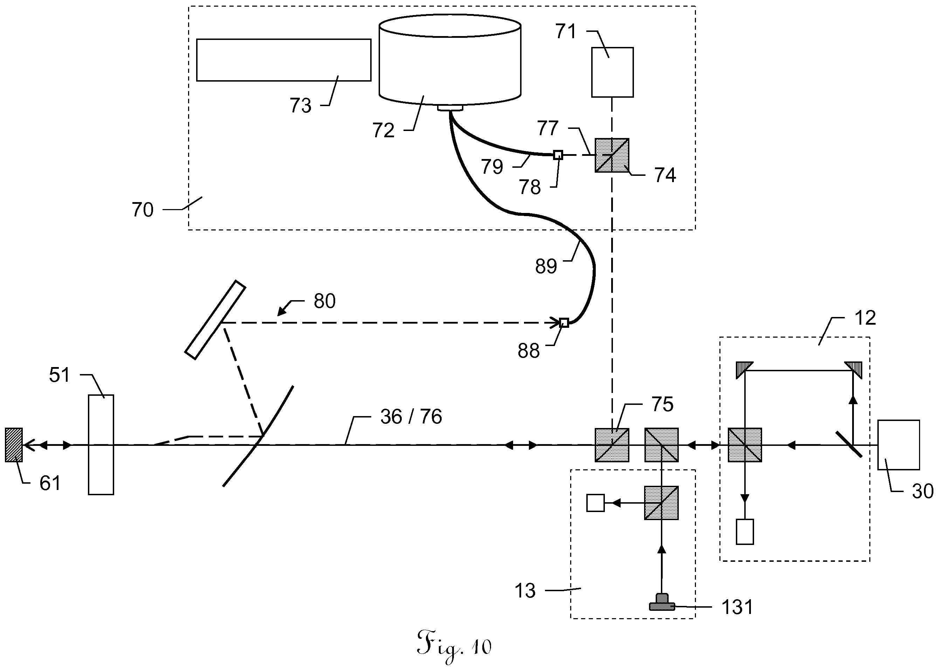

In Figur 10 ist die zweite Ausführungsform des optischen Aufbaus dargestellt, wobei eine Entfernungsmessung gleichzeitig mit dem WFD-Modul 70 und den anderen Entfernungsmessern (ADM 13, Interferometer 12) durchgeführt wird, was zu einer Kalibrierung der Komponenten des WFD-Moduls 70 oder der anderen Entfernungsmesser eingesetzt werden kann.

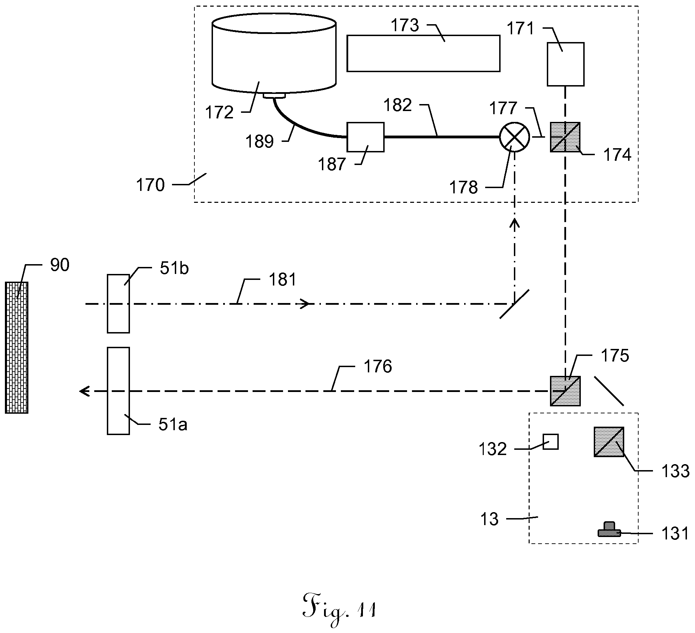

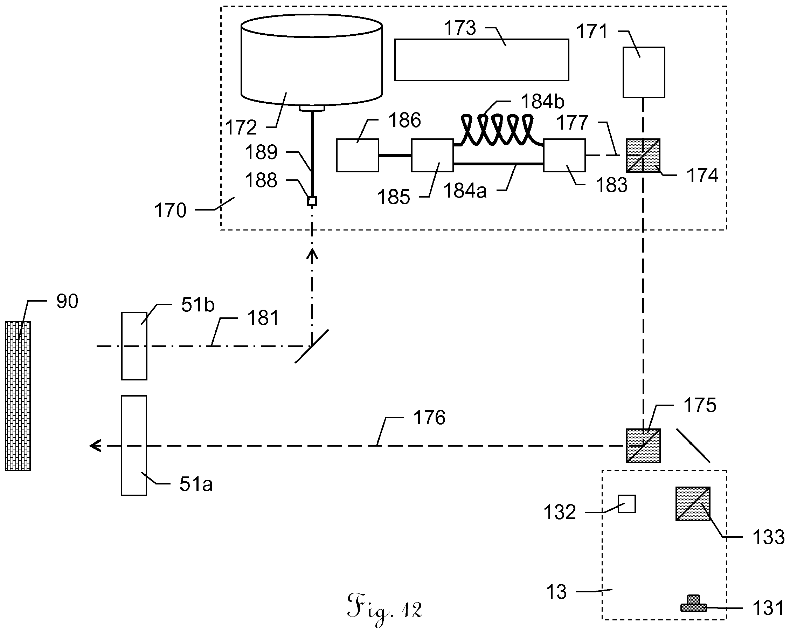

Die Figuren 11 und 12 zeigen zwei Beispiele des optischen Aufbaus eines Lasertrackers. Diese weisen neben dem ADM 13 jeweils ein FMCW-Modul 170 auf, das eine zum Aussenden eines frequenzmodulierten Laserstrahls 176 ausgestaltete zweite Strahlquelle 171 aufweist, wodurch eine Entfernungsmessung mittels eines FMCW-Verfahrens ermöglicht wird. Insbesondere kann das FMCW-Modul einen kohärenten Laserradar aufweisen, wie z. B. in der EP 1 869 397 B1 beschrieben.

Der in dieser Ausführungsform verwendete Ansatz zur Entfernungsmessung zu einer diffus streuenden Oberfläche eines Messobjekts 90 besteht darin, frequenzmodulierte elektromagnetische Strahlung, wie z. B. Licht, auf das zu vermessende Ziel auszusenden und nachfolgend ein oder mehrere Echos von rückstreuenden Objekten, idealerweise ausschliesslich vom zu vermessenden Ziel, zu empfangen. Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt.

Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Im optischen Bereich werden als Strahlungsquellen zumeist Laser eingesetzt. Zur Emission und zum Empfang kommen im optischen Bereich Sende- und Empfangsoptiken zum Einsatz, denen ein Detektor bzw. Empfänger mit nachfolgendem Mischer, A/D-Wandler und digitalem Signal-Prozessor nachgeschaltet ist.

Üblicherweise wird vom Signalgenerator als Signal s(t) ein linear frequenzmodulierter Chirp erzeugt:

$$s(t) = a + b \cdot \cos(2\pi \cdot \Phi(t)), \quad \Phi(t) = c + d \cdot t + e \cdot t^2 \tag{1}$$

wobei die momentane Frequenz $f(t) = \dfrac{d\Phi(t)}{dt}$ dann eine lineare Funktion der Zeit ist:

$$f(t) = d + 2e \cdot t \tag{2}$$

was die Bestimmung der Laufzeiten vereinfacht.

Im Fall von n Zielen mit relativen Amplituden $A_k$ und Laufzeiten $t_k$ ($k = 1,..., n$) kann das rauschfreie Echosignal e(t) wie folgt geschrieben werden:

$$e(t) = \sum_{k=1}^{n} A_k s(t - t_k) \tag{3}$$

Dieses Echosignal e(t) wird detektiert und mit dem Signal m(t) gemischt:

$$m(t) = \begin{cases} s(t - t_0), & \text{homodyn} \\ \cos(2\pi(f_0 t + \varphi)), & \text{heterodyn} \end{cases} \tag{4}$$

Durch das Mischen mit m(t) entsteht das Signal

$$d(t) = \int_0^{\infty} h(t - t') \cdot e(t') \cdot m(t') \, dt' \tag{5}$$

wobei h die Impulsantwort eines geeigneten Tiefpassfilters bezeichnet.

Für einen idealen Tiefpass lässt sich die Tiefpassfilterung in (5) gemäss dem Stand der Technik in sehr guter Approximation explizit ausführen, im homodynen Fall zum Beispiel folgt aus der ersten Gleichung in (1) und den Gleichungen (3) bis (5) nach Weglassen der hochfrequenten Terme

$$d(t) = d_0 + \frac{b^2}{2} \sum_{k=1}^{n} A_k \cos\big(2\pi[\Phi(t - t_k) - \Phi(t - t_0)]\big) \tag{5'}$$

mit dem Signaloffset $\quad d_0 = a^2 \displaystyle\sum_{k=1}^{n} A_k \quad$.

Das gemischte Signal d(t) wird auf dem endlichen Messintervall $-T/2 \leq t \leq T/2$ digitalisiert und abgespeichert.

Aus der Frequenz- und ggf. der Phaseninformation dieses Signals werden die Laufzeiten $t_k$ bestimmt, wobei normalerweise n als klein und eventuell auch als bekannt vorausgesetzt werden kann. Eines der Echos, z.B. das *n*-te, kann auch von einem fixen und bekannten Referenzziel stammen und die Zieldistanzen der restlichen Ziele werden aus den Laufzeitdifferenzen $t_k - t_n$ und der bekannten Distanz des Referenzziels berechnet. Im homodynen Fall kann das Mischsignal m(t) = s(t - t₀) selber als Referenz dienen, $t_0$ entspricht dann der Referenzdistanz.

Im Fall eines linearen Chirps gemäss Gleichung (1) trägt das k-te Echo die momentane Frequenz

$$f_k(t) = \begin{cases} 2e(t_0 - t_k), & \text{homodyn} \\ d + 2e(t - t_k) - f_0, & \text{heterodyn} \end{cases} \tag{6}$$

zum Signal d(t) bei. Somit können in diesem Fall aus einer - im heterodynen Fall zeitaufgelösten - Frequenzanalyse des Signals d(t) grundsätzlich die Laufzeiten $t_k$ direkt bestimmt werden, wobei die Auflösung allerdings noch grob ist. Genauere Resultate können durch die Berücksichtigung der Phaseninformation erhalten werden.

Ein frequenzmoduliertes Verfahren mit kontinuierlicher Emission (FMCW-Verfahren) zur Abstandsmessung mit elektromagnetischer Strahlung im Radarbereich ist aus der DE 196 10 970 A1 bekannt. Dabei wird ein zeitlinear frequenzmoduliertes (gewobbeltes) Signal ausgesandt und nach Reflexion an einem Ziel und nachfolgendem Empfang analysiert. Aus Sende- und Empfangssignal wird hierbei in einem Mischer ein Zwischenfrequenzsignal erzeugt, welches einer schnellen Fouriertransformation unterworfen wird.

In Figur 11 wird ein Messen einer Entfernung zu einem eine diffus streuende Oberfläche aufweisenden Messobjekt 90 mittels des FMCW-Verfahrens.

Ein FMCW-Modul 170 ist gemeinsam mit dem ADM 13 in der Strahllenkeinheit des Lasertrackers verbaut und verwendet dieselbe Laseraussendeoptik 51a wie der ADM 13. Das FMCW-Modul 170 weist eine Strahlquelle 171 mit Ansteuermitteln zur Erzeugung eines frequenzmodulierten Laserstrahls 176 mit kontinuierlich veränderlicher Frequenz auf. Der frequenzmodulierte Laserstrahl 176 wird zunächst auf einen ersten Strahlteiler 174 geleitet, wodurch ein Referenzstrahl 177 abgespalten wird, der auf ein Mischerelement 178 geleitet wird.

Der andere Teil des frequenzmodulierten Laserstrahls 176 wird über einen zweiten Strahlteiler 175 in den gemeinsamen Strahlgang mit der Messstrahlung des ADM 13 eingekoppelt und durch die Laseraussendeoptik 51a auf das zu vermessende entfernte Messobjekt 90 gelenkt. Von der diffus streuenden Oberfläche des Messobjekts 90 remittierte Strahlung 181 des frequenzmodulierten Laserstrahls 176 gelangt teilweise durch die (hier rein beispielhaft separat von der Laseraussendeoptik 51a ausgeführte) Laserempfangsoptik 51b wieder in die Strahllenkeinheit. In dieser wird die remittierte Strahlung 181 auf das Mischerelement 178 geleitet, in welchem die remittierte Strahlung 181 mit dem Referenzstrahl 177 homodyn oder heterodyn gemischt wird. Optional kann die remittierte Strahlung 181 zuvor mittels eines HF-Vorverstärkers verstärkt worden sein.

Das entstandene Mischsignal 182 wird dann zum Detektor 172 des FMCW-Moduls 170 geführt, insbesondere kann das Mischsignal dabei auch über einen Tiefpassfilter und einen Basisbandverstärker zum Detektor 172 geführt werden, der insbesondere als Analog/Digitalwandler ausgestaltet sein kann. Durch eine Recheneinheit 173 kann dann auf bekannte Art und Weise ein Frequenzunterschied, d. h. insbesondere ein Abstand zwischen den Frequenzen des Referenzstrahls 177 und der remittierten Strahlung 181, ermittelt werden und daraus die Entfernung zum Messobjekt 90 berechnet werden.

Figur 12 zeigt ein alternatives Beispiel des FMCW-Moduls 170. Dieses weist anstelle des Mischerelements ein optisches Bezugssystem für den Referenzstrahl 177 mit zwei Lichtleitfasern 184a,184b auf. Ein solches optisches Bezugssystem ist beispielsweise in der EP 1 869 397 B1 beschrieben. Dabei weisen die erste Lichtleitfaser 184a eine andere Länge auf als die zweite Lichtleitfaser 184b. Der Referenzstrahl 177 wird in einem ersten Lichtleitfaserkoppler 183 aufgeteilt, je zu einem Teil durch die erste und die zweite Lichtleitfaser 184a,184b geleitet und mittels eines zweiten Lichtleitfaserkopplers 185 wieder vereint auf einen Referenzstrahldetektor 186 geführt. Aufgrund der bekannten unterschiedlichen Länge der beiden Lichtleitfasern 184a,184b kann durch den Referenzstrahldetektor 186 die Frequenz des Referenzstrahls 177 zu jedem Zeitpunkt genau erfasst werden. Der remittierte Anteil 181 des frequenzmodulierten Laserstrahls 176 wird über die Einkoppelungseinheit 188 und den Lichtwellenleiter 189 auf den Detektor 172 (z. B. Analog/Digitalwandler) geleitet. Basierend auf den Frequenzen der remittierten Strahlung 181 und des Referenzstrahls 177, bzw. anhand deren zeitlichen Versatzes wird in der Recheneinheit 183 die Entfernung zum Ziel auf bekannte Art berechnet.

Bei den in den Figuren 11 und 12 dargestellten Beispiels- formen des FMCW-Moduls 170 kann das Empfangen der remittierten Strahlung 181 in der Strahllenkeinheit optional auch über eine Strahlempfangseinheit, wie sie z. B. in den Figuren 7a und 7b dargestellt ist, erfolgen. Ebenso können die Laseraussendeoptik 51a und die Laserempfangsoptik 51b als eine gemeinsame Laseraussende- und -empfangsoptik ausgeführt sein.

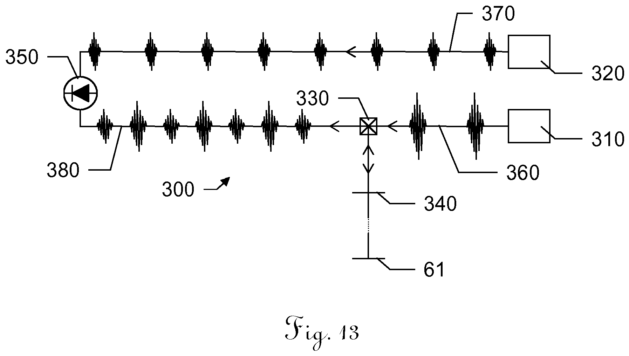

In einer weiteren, in Figur 13 dargestellten, Beispiels- form weist zumindest der erste oder zweite Entfernungsmesser Mittel auf, die ein auf einem Frequenzkamm basierenden oder durch einen Frequenzkamm unterstützten Messen von Distanzen ermöglichen. Dazu weist der entsprechende Entfernungsmesser eine Laserquelle auf, die zur Aussendung eines gepulsten, hochpräzise getimten Femtosekunden-Lasers ausgestaltet ist, der ein Trägersignal aufweist. Dadurch kann im Frequenzbereich ein sogenannter Frequenzkamm dünner scharfer Linien erzeugt werden, der für eine präzise optische Frequenzvermessung verwendet werden kann. Verschiedene Ansätze zum frequenzkammbasierten oder frequenzkammunterstützten Messen von Distanzen werden beispielsweise in dem Aufsatz "Frequency-Comb Based Approaches to Precision Ranging Laser Radar" (N. R. Newbury, T.-A. Liu, I. Coddington, F. Giorgetta, E. Baumann, W. C. Swann; National Institute of Standards and Technology) beschrieben. In Figur 13 ist rein beispielhaft eine Interferometer-Einheit 300 mit zwei Frequenzkamm-Lasersignalen 360,370 ("dual-comb interferometer") zum Durchführen einer kombinierten Laufzeit- und interferometrischen Distanzmessung dargestellt. Dabei sendet eine erste Strahlquelle 310 ein erstes Frequenzkammsignal 360 aus. Dieses wird über einen ersten Strahlteiler 330 und über einen Referenzstrahlteiler 340 auf einen Retroreflektor als Messziel 61 geleitet. Das von Messziel 61 und Referenz 360 reflektierte kombinierte Signal 380 wird auf eine Frequenzkammanalyseeinheit 350 geleitet, wo die relative Ankunftszeit der von Messziel 61 und Referenz 360 reflektierten Pulse für eine Laufzeitdistanzmessung verwendet werden kann. Ein von einer zweiten Strahlquelle 320 erzeugtes Referenzfrequenzkammsignal 370, das eine von dem ersten Frequenzkammsignal 360 leicht abweichende Wiederholungsrate aufweist, kann in der Frequenzkammanalyseeinheit 350 zusammen mit dem reflektierten kombinierten Signal 380 für eine interferometrische Distanzmessung heterodyn ausgelesen werden. In einem Lasertracker kann sowohl die erste als auch die zweite Entfernungsmesseinheit zum frequenzkammbasierten oder frequenzkammunterstützten Messen einer Entfernung zu einem Ziel ausgestaltet sein. Neben der in Figur 13 rein beispielhaft dargestellten Ausführungsform kann insbesondere auch ein erfindungsgemässes WFD-Modul oder ein FMCW-Modul eines Lasertrackers frequenzkammunterstützt ausgestaltet sein.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Vermessen von Oberflächen bzw. Objekten und mit Vermessungsgeräten des Stands der Technik kombiniert werden.

**Patentansprüche**

1. Lasertracker (1) zur Positionsbestimmung und insbesondere fortlaufenden Verfolgung eines als Retroreflektor (61) ausgebildeten oder zumindest einen Retroreflektor aufweisenden Ziels (60), wobei der Lasertracker (1) mindestens aufweist

   • eine Basis (40),
   • eine Stütze (20), die um eine erste Drehachse (9) drehbar auf der Basis (40) befestigt ist,
   • eine Strahllenkeinheit (10), die um eine zur ersten Drehachse (9) im Wesentlichen orthogonale zweite Drehachse (8) drehbar an der Stütze (20) befestigt ist,
   • Mittel zum Erfassen eines Drehwinkels der Stütze (20) relativ zur Basis (40), und
   • Mittel zum Erfassen eines Drehwinkels der Strahllenkeinheit (10) relativ zur Stütze (20),

   wobei die Strahllenkeinheit (10) aufweist

   • eine Laseraussende- und -empfangsoptik (51) zum Aussenden von Messstrahlung und zum Empfangen von Messstrahlungsreflexionen, und
   • eine erste optische Distanzmesseinheit (100) mit mindestens einem ersten Distanzmesser (12, 13) zur Messung der Distanz zu dem Retroreflektor (61) mittels einer ersten Messstrahlung (36),

   eine zweite optische Distanzmesseinheit (70), wobei die zweite optische Distanzmesseinheit (70) eine zweite Strahlquelle (71) zur Emission einer zweiten Messstrahlung (76), einen Detektor (72) und eine Steuerungs- und Verarbeitungseinheit (73) zur Messung einer Distanz zu einer diffus streuenden Oberfläche (92) eines Zielobjektes (90) mittels der zweiten Messstrahlung (76) aufweist,

   • die zweite Strahlquelle (71) dazu ausgestaltet ist, eine gepulsten Lichtstrahlung, insbesondere Laserstrahl, als zweite Messstrahlung (76) auszusenden,
   • ein von der Oberfläche (92) des Zielobjektes (90) remittierter Anteil (81) der zweiten Messstrahlung (76) dem Detektor (72) zuleitbar ist,
   • der Detektor (72) dazu ausgestaltet ist, mindestens einen Puls des remittierter Anteils (81) der zweiten Messstrahlung (76) zu erfassen, **dadurch gekennzeichnet, dass**
   • die zweite optische Distanzmesseinheit (70) dazu ausgestaltet ist, den erfassten Puls im Rahmen eines Waveform-Digitizing-Prozesses zu digitalisieren und basierend auf dem digitalisierten Puls eine Entfernung zur Oberfläche (92) des Zielobjekts (90) zu ermitteln.

2. Lasertracker (1) nach Anspruch 1,
   **dadurch gekennzeichnet, dass**
   ein Teil der zweiten Messstrahlung (76) als Referenzstrahl (77) dem Detektor (72) zuleitbar ist, insbesondere mittels eines im Strahlgang der zweiten Messstrahlung (76) in der Strahllenkeinheit (10) bereitgestellten ersten Strahlteilers (74).

3. Lasertracker (1) nach Anspruch 1 oder Anspruch 2,
   **gekennzeichnet durch**
   eine Strahlempfangseinheit (80), die ausgestaltet ist, durch die Laseraussende- und -empfangsoptik (51) in die Strahllenkeinheit (10) eingetretene remittierte Strahlung (81, 181) zur zweiten optischen Distanzmesseinheit (170) zu leiten,
   wobei die Strahlempfangseinheit (80) einen Paraboloid-Spiegel (85) mit einer parabolisch ausgestalteten Spiegeloberfläche aufweist, wobei der Paraboloid-Spiegel (85) dazu ausgestaltet ist, auf der Spiegeloberfläche auftreffende remittierte Strahlung (81, 181) in einem Brennpunkt zu bündeln, und insbesondere dazu ausgestaltet ist, in einem Zentrum der Spiegeloberfläche auftreffende remittierte Strahlung (81, 181) in einem Winkel von 65° bis 75°, insbesondere 70°, zu reflektieren,
insbesondere wobei

- am Brennpunkt ein Einkopplungselement (88) vorgesehen ist zum Einkoppeln der gebündelten remittierten Strahlung (82) in einen Lichtwellenleiter (89), insbesondere wobei in dem Strahlgang zwischen dem Paraboloid-Spiegel (85) und dem Einkopplungselement (88) ein Umlenkelement (86) bereitgestellt ist; und/oder
- der Paraboloid-Spiegel (85) ausserhalb des gemeinsamen Strahlganges der ersten Messstrahlung (36) und der zweiten Messstrahlung (76, 176) angeordnet ist, insbesondere wobei die Strahlempfangseinheit (80) eine im gemeinsamen Strahlgang angeordnete Strahlteilungsvorrichtung (83) aufweist, zum Lenken der remittierten Strahlung (81, 181) auf den Paraboloid-Spiegel (85).

4. Lasertracker (1) nach einem der vorangehenden Ansprüche,
**gekennzeichnet durch**
eine Abtastfunktionalität, im Rahmen derer der Lasertracker (1) dazu ausgestaltet ist, mittels der zweiten Messstrahlung (76, 176) eine Vielzahl von Entfernungsmessungen zu einer Vielzahl von Messpunkten auf der Oberfläche (92) des Messobjektes (90) durchzuführen, wobei die Steuerungs- und Verarbeitungseinheit (73, 173) derart ausgebildet ist, dass

- für die Vielzahl der Entfernungsmessungen, die jeweils erfassten Drehwinkel mit der gemessenen Entfernung verknüpft werden, sodass durch die Verknüpfung jeweils eine Punkt-Position definiert ist, und
- eine eine Anzahl der Punkt-Positionen aufweisende Punktwolke erzeugbar ist.

5. Lasertracker (1) nach einem der vorangehenden Ansprüche,
**gekennzeichnet durch**
eine Kalibrierungsfunktionalität zum Kalibrieren der ersten optischen Distanzmesseinheit und/oder der zweiten optischen Distanzmesseinheit (70, 170), wobei die Steuerungs- und Verarbeitungseinheit (73, 173) derart ausgebildet ist, dass

- die erste Messstrahlung (36) und die zweite Messstrahlung (76, 176) in zeitlichem Zusammenhang, insbesondere gleichzeitig, auf einen Retroreflektor (61) emittierbar sind, und
- basierend auf einer durch die erste optische Distanzmesseinheit gemessenen ersten Distanz und einer durch die zweite optische Distanzmesseinheit (70, 170) gemessenen zweiten Distanz zu dem Retroreflektor (61) die erste optische Distanzmesseinheit und/oder die zweite optische Distanzmesseinheit (70, 170) kalibrierbar sind.

6. Lasertracker (1) nach einem der vorangehenden Ansprüche,
**dadurch gekennzeichnet, dass**

- die Stahllenkeinheit (10) einen positionssensitiven Detektor, insbesondere einen Tracking-Flächensensor, zum Erfassen der von einem Ziel reflektierten ersten Messstrahlung (36) oder zweiten Messstrahlung (76, 176) aufweist, sodass abhängig von einer Position der reflektierten Messstrahlung auf dem Detektor die Ausrichtung der Messstrahlung für eine fortlaufende Zielverfolgung nachführbar ist, insbesondere wobei die Stahllenkeinheit (10) ausserdem eine Lokalisierungskamera (52) zur Groblokalisierung des Messhilfsmittels (60) und/oder eine Übersichtskamera (56) zur Bereitstellung von Bildern für einen Benutzer aufweist;
- die erste optische Distanzmesseinheit ein Interferometer (12) und/oder einen Absolutdistanzmesser (13) aufweist;
- die Stahllenkeinheit (10) Umlenkmittel, insbesondere Strahlteiler (75, 175), aufweist zum Erzeugen eines gemeinsamen Strahlganges der ersten Messstrahlung (36) und der zweiten Messstrahlung (76, 176) in der Strahllenkeinheit (10), sodass die erste Messstrahlung (36) und die zweite Messstrahlung (76, 176) durch dieselbe Laseraussende- und -empfangsoptik (51) emittierbar sind;
- die Laseraussende- und -empfangsoptik (51) als eine Laseraussendeoptik (51a) und eine von dieser separate Laserempfangsoptik (51b) ausgestaltet ist; und/oder
- die Strahllenkeinheit zwei Laseraussende- und -empfangsoptiken (51) aufweist, die erste Messstrahlung (36) durch die erste Laseraussende- und -empfangsoptik emittierbar ist, und die zweite Messstrahlung (76, 176) durch die zweite Laseraussende- und -empfangsoptik emittierbar ist.

7. Verfahren zum Verwenden eines WFD-Moduls (70) in einem Lasertracker (1) zum Bereitstellen zusätzlicher Messfunktionalität, wobei der Lasertracker (1) eine Strahllenkeinheit (10) aufweist mit

- einer Laseraussende- und -empfangsoptik (51) zum Aussenden von Messstrahlung und zum Empfangen von Messstrahlungsreflexionen, und
- eine optische Distanzmessvorrichtung mit mindestens einem ersten Distanzmesser (12, 13) zur Messung der Distanz zu einem Messhilfsmittel (60) mittels einer ersten Messstrahlung (36),

**gekennzeichnet durch**

- ein Erzeugen eines gepulsten Lichtstrahls, insbesondere Laserstrahls, als zweite Messstrahlung (76) durch eine Strahlquelle (71) des WFD-Moduls (70),
- ein Emittieren der zweiten Messstrahlung (76) auf ein zu vermessendes Ziel, wobei ein Teil der zweiten Messstrahlung (76) als Referenzstrahl (77) dem Detektor (72) zugeleitet wird, und ein anderer Teil der zweiten Messstrahlung (76) durch die Laseraussende- und -empfangsoptik (51) ausgesendet wird,
- eine von dem Ziel remittierter und durch die Laseraussende- und -empfangsoptik (51) empfangener Anteil (81) der zweiten Messstrahlung (76) dem Detektor (72) zugeleitet wird,
- der Detektor (72) Pulse des zugeleiteten Referenzstrahls (77) und des remittierten Anteils (81) der zweiten Messstrahlung (76) erfasst,
- die erfassten Pulse im Rahmen eines Waveform-Digitizing-Prozesses des WFD-Moduls (70) digitalisiert werden, und
- basierend auf den digitalisierten Pulsen eine Entfernung zum Ziel ermittelt wird.

8. Verfahren nach Anspruch 7,
**dadurch gekennzeichnet, dass**
das zu vermessende Ziel eine diffus streuende Oberfläche (92) eines Messobjektes (90) ist, wobei

- die zweite Messstrahlung (76, 176) auf die diffus streuende Oberfläche (92) emittiert wird,
- ein Anteil (81, 181) der zweiten Messstrahlung (76) von der Oberfläche (92) remittiert wird, und
- die Entfernung zur Oberfläche (92) ermittelt wird, insbesondere wobei mittels der zweiten Messstrahlung (76, 176) eine Vielzahl von Entfernungsmessungen zu einer Vielzahl von Messpunkten auf der Oberfläche (92) durchgeführt wird, wobei
- für die Vielzahl der Entfernungsmessungen eine aktuelle Ausrichtung der Strahllenkeinheit (10) mit der jeweils gemessenen Entfernung verknüpft wird, sodass durch die Verknüpfung jeweils eine Punkt-Position definiert ist, und
- eine eine Anzahl der Punkt-Positionen aufweisende Punktwolke erzeugt wird.

9. Verfahren nach einem der Ansprüche 7 bis 8,
**dadurch gekennzeichnet, dass**
das zu vermessende Ziel ein Retroreflektor (61) ist, insbesondere als Teil eines Messhilfsmittels (60), wobei

- die zweite Messstrahlung (76, 176) auf den Retroreflektor (61) emittiert wird,
- die zweite Messstrahlung (76, 176) als Messstrahlungsreflexion (81, 181) von dem Retroreflektor (61) reflektiert wird, und
- die Entfernung zum Retroreflektor (61) ermittelt wird,

insbesondere wobei die erste Messstrahlung (36) und die zweite Messstrahlung (76, 176) auf den Retroreflektor (61) emittiert werden, wobei eine mittels der ersten Messstrahlung gemessene Entfernung (36) und eine mittels der zweiten Messstrahlung (76, 176) gemessene Entfernung zum Kalibrieren des ersten optischen Distanzmessers (12, 13) und/oder des WFD-Moduls (70) verwendet werden, insbesondere wobei die erste Messstrahlung (36) und die zweite Messstrahlung (76, 176) gleichzeitig emittiert werden.

10. Computerprogrammprodukt, umfassend Befehle, die bewirken, dass der Lasertracker nach einem der Ansprüche 1, 2 und 4-6 die Verfahrenschritten nach Ansprüche 7, 8 oder 9 ausführt.

**Claims**

1. Laser tracker (1) for position determination and in particular continuous tracking of a target (60) embodied as a retroreflector (61) or having at least one retroreflector, wherein the laser tracker (1) at least comprises

   • a base (40),
   • a support (20), which is fixed on the base (40) rotatably about a first rotation axis (9),
   • a beam directing unit (10), which is fixed to the support (20) rotatably about a second rotation axis (8), which is substantially orthogonal to the first rotation axis (9),
   • means for detecting a rotation angle of the support (20) relative to the base (40), and
   • means for detecting a rotation angle of the beam directing unit (10) relative to the support (20),

   wherein the beam directing unit (10) comprises

   • a laser emission and reception optical unit (51) for emitting measurement radiation and for receiving measurement radiation reflections, and
   • a first optical distance measuring unit (100) having at least one first distance measuring device (12, 13) for measuring the distance to the retroreflector (61) by means of a first measurement radiation (36),
   • a second optical distance measuring unit (70), wherein the second optical distance measuring unit (70) comprises a second beam source (71) for emitting a second measurement radiation (76), a detector (72) and a control and processing unit (73) for measuring a distance to a diffusely scattering surface (92) of a target object (90) by means of the second measurement radiation (76),
   • the second beam source (71) is designed to emit a pulsed light radiation, in particular laser beam, as second measurement radiation (76),
   • a portion (81) of the second measurement radiation (76) that is reflected from the surface (92) of the target object (90) is forwardable to the detector (72),
   • the detector (72) is designed to detect at least one pulse of the reflected portion (81) of the second measurement radiation (76),

   **characterized in that**

   • the second optical distance measuring unit (70) is designed to digitize the detected pulse in the context of a waveform digitizing process and to ascertain a distance to the surface (92) of the target object (90) on the basis of the digitized pulse.

2. Laser tracker (1) according to Claim 1,
   **characterized in that**
   a part of the second measurement radiation (76) is forwardable to the detector (72) as reference beam (77), in particular by means of a first beam splitter (74) provided in the beam path of the second measurement radiation (76) in the beam directing unit (10) .

3. Laser tracker (1) according to Claim 1 or Claim 2,
   **characterized by**
   a beam receiving unit (80), which is designed to guide reflected radiation (81, 181) that entered the beam directing unit (10) through the laser emission and reception optical unit (51) to the second optical distance measuring unit (170), wherein the beam receiving unit (80) comprises a paraboloidal mirror (85) having a parabolically designed mirror surface, wherein the paraboloidal mirror (85) is designed to concentrate reflected radiation (81, 181) impinging on the mirror surface at a focal point, and in particular is designed to reflect reflected radiation (81, 181) impinging at a center of the mirror surface at an angle of 65° to 75°, in particular 70°,
   in particular wherein

   • at the focal point a coupling-in element (88) is provided for coupling the concentrated reflected radiation (82) into an optical waveguide (89), in particular wherein a deflection element (86) is provided in the beam path between the paraboloidal mirror (85) and the coupling-in element (88), and/or
   • the paraboloidal mirror (85) is arranged outside the common beam path of the first measurement radiation (36) and the second measurement radiation (76, 176), in particular wherein the beam receiving unit (80) comprises a beam splitting apparatus (83) arranged in the common beam path, for directing the reflected radiation (81, 181) onto the paraboloidal mirror (85) .

4. Laser tracker (1) according to any one of the preceding claims,
**characterized by**
a scanning functionality, in the context of which the laser tracker (1) is designed to carry out, by means of the second measurement radiation (76, 176), a multiplicity of distance measurements with respect to a multiplicity of measurement points on the surface (92) of the measurement object (90), wherein the control and processing unit (73, 173) is designed in such a way that

- for the multiplicity of the distance measurements, the rotation angles respectively detected are linked with the measured distance, such that a point position is in each case defined by the linking, and
- a point cloud comprising a number of the point positions is generatable.

5. Laser tracker (1) according to any one of the preceding claims,
**characterized by**
a calibration functionality for calibrating the first optical distance measuring unit and/or the second optical distance measuring unit (70, 170), wherein the control and processing unit (73, 173) is designed in such a way that

- the first measurement radiation (36) and the second measurement radiation (76, 176) are emittable in a temporal relationship, in particular simultaneously, onto a retroreflector (61), and
- the first optical distance measuring unit and/or the second optical distance measuring unit (70, 170) are/is calibratable on the basis of a first distance to the retroreflector (61) as measured by the first optical distance measuring unit and a second distance to the retroreflector (61) as measured by the second optical distance measuring unit (70, 170) .

6. Laser tracker (1) according to any one of the preceding claims,
**characterized in that**

- the beam directing unit (10) comprises a position-sensitive detector, in particular a tracking area sensor, for detecting the first measurement radiation (36) or second measurement radiation (76, 176) reflected by a target, such that depending on a position of the reflected measurement radiation on the detector the alignment of the measurement radiation is readjustable for a continuous target tracking, in particular wherein the beam directing unit (10) additionally comprises a localization camera (52) for the coarse localization of the measuring aid (60) and/or an overview camera (56) for providing images for a user;
- the first optical distance measuring unit comprises an interferometer (12) and/or an absolute distance measuring device (13);
- the beam directing unit (10) comprises deflection means, in particular beam splitters (75, 175), for generating a common beam path of the first measurement radiation (36) and the second measurement radiation (76, 176) in the beam directing unit (10), such that the first measurement radiation (36) and the second measurement radiation (76, 176) are emittable through the same laser emission and reception optical unit (51);
- the laser emission and reception optical unit (51) is designed as a laser emission optical unit (51a) and a laser reception optical unit (51b) separate from the latter; and/or
- the beam directing unit comprises two laser emission and reception optical units (51), the first measurement radiation (36) is emittable through the first laser emission and reception optical unit, and the second measurement radiation (76, 176) is emittable through the second laser emission and reception optical unit.

7. Method for using a WFD module (70) in a laser tracker (1) for providing additional measurement functionality, wherein the laser tracker (1) comprises a beam directing unit (10) having

- a laser emission and reception optical unit (51) for emitting measurement radiation and for receiving measurement radiation reflections, and
- an optical distance measuring apparatus having at least one first distance measuring device (12, 13) for measuring the distance to a measuring aid (60) by means of a first measurement radiation (36),

**characterized by**

- generating a pulsed light beam, in particular laser beam, as second measurement radiation (76) by means of a beam source (71) of the WFD module (70),
- emitting the second measurement radiation (76) onto a target to be measured, wherein one part of the second measurement radiation (76) is forwarded as reference beam (77) to the detector (72), and another part of the second measurement radiation (76) is emitted through the laser emission and reception optical unit (51),
• a portion (81) of the second measurement radiation (76) that is reflected from the target and received through the laser emission and reception optical unit (51) is forwarded to the detector (72),
• the detector (72) detects pulses of the forwarded reference beam (77) and of the reflected portion (81) of the second measurement radiation (76),
• the detected pulses are digitized in the context of a waveform digitizing process of the WFD module (70), and
• a distance to the target is ascertained on the basis of the digitized pulses.

**8.** Method according to Claim 7,
**characterized in that**
the target to be measured is a diffusely scattering surface (92) of a measurement object (90), wherein

• the second measurement radiation (76, 176) is emitted onto the diffusely scattering surface (92),
• a portion (81, 181) of the second measurement radiation (76) is reflected from the surface (92), and
• the distance to the surface (92) is ascertained, in particular wherein a multiplicity of distance measurements with respect to a multiplicity of measurement points on the surface (92) are carried out by means of the second measurement radiation (76, 176),

wherein

• for the multiplicity of the distance measurements a present alignment of the beam directing unit (10) is linked with the respectively measured distance, such that a point position is in each case defined by the linking, and
• a point cloud comprising a number of the point positions is generated.

**9.** Method according to any one of Claims 7 to 8,
**characterized in that**
the target to be measured is a retroreflector (61), in particular as part of a measuring aid (60), wherein

• the second measurement radiation (76, 176) is emitted onto the retroreflector (61),
• the second measurement radiation (76, 176) is reflected as measurement radiation reflection (81, 181) from the retroreflector (61), and
• the distance to the retroreflector (61) is ascertained,

in particular wherein the first measurement radiation (36) and the second measurement radiation (76, 176) are emitted onto the retroreflector (61), wherein a distance measured by means of the first measurement radiation (36) and a distance measured by means of the second measurement radiation (76, 176) are used for calibrating the first optical distance measuring device (12, 13) and/or the WFD module (70), in particular wherein the first measurement radiation (36) and the second measurement radiation (76, 176) are emitted simultaneously.

**10.** Computer program product, comprising instructions which cause the laser tracker according to one of claims 1, 2 and 4-6 to carry out the method steps according to claims 7, 8 or 9.

**Revendications**

**1.** Appareil de poursuite laser (1) pour la détermination de position et, en particulier, la poursuite continue d'une cible (60) réalisée sous la forme d'un rétroréflecteur (61) ou présentant au moins un rétroréflecteur, l'appareil de poursuite laser (1) présentant au moins

• une base (40),
• un support (20) qui est fixé sur la base (40) de manière à pouvoir tourner autour d'un premier axe de rotation (9),
• une unité de direction de faisceau (10) qui est fixée sur le support (20) de manière à pouvoir tourner autour d'un deuxième axe de rotation (8) sensiblement orthogonal au premier axe de rotation (9),
• des moyens pour détecter un angle de rotation du support (20) par rapport à la base (40) et
• des moyens pour détecter un angle de rotation de l'unité de direction de faisceau (10) par rapport au support (20),

dans lequel l'unité de direction de faisceau (10) présente

• une optique d'émission et de réception laser (51) pour émettre un rayonnement de mesure et pour recevoir des réflexions de rayonnement de mesure et

• une première unité optique de mesure de distance (100) comprenant au moins un premier distancemètre (12, 13) pour mesurer la distance par rapport au rétroréflecteur (61) au moyen d'un premier rayonnement de mesure (36),

• une deuxième unité optique de mesure de distance (70), la deuxième unité optique de mesure de distance (70) présentant une deuxième source de rayonnement (71) pour l'émission d'un deuxième rayonnement de mesure (76), un détecteur (72) et une unité de commande et de traitement (73) pour la mesure d'une distance par rapport à une surface à dispersion diffuse (92) d'un objet cible (90) au moyen du deuxième rayonnement de mesure (76),

• la deuxième source de rayonnement (71) étant conçue pour envoyer un rayonnement lumineux pulsé, en particulier un faisceau laser, en tant que deuxième rayonnement de mesure (76),

• une part (81) du deuxième rayonnement de mesure (76) renvoyée par la surface (92) de l'objet cible (90) peut être amenée au détecteur (72),

• le détecteur (72) est conçu pour détecter au moins une impulsion de la part renvoyée (81) du deuxième rayonnement de mesure (76),

**caractérisé en ce que**

• la deuxième unité optique de mesure de distance (70) est conçue pour numériser l'impulsion détectée dans le cadre d'un processus de numérisation de la forme d'onde et pour déterminer une distance par rapport à la surface (92) de l'objet cible (90) sur la base de l'impulsion numérisée.

2. Appareil de poursuite laser (1) selon la revendication 1,
**caractérisé en ce**
**qu'**une partie du deuxième rayonnement de mesure (76) peut être amenée au détecteur (72) en tant que faisceau de référence (77), en particulier au moyen d'un premier diviseur de faisceau (74) prévu dans le trajet de faisceau du deuxième rayonnement de mesure (76) dans l'unité de direction de faisceau (10).

3. Appareil de poursuite laser (1) selon la revendication 1 ou la revendication 2,
**caractérisé par**
une unité de réception de faisceau (80) qui est configurée pour guider le rayonnement renvoyé (81, 181) entrant dans l'unité de direction de faisceau (10) à travers l'optique d'émission et de réception laser (51) vers la deuxième unité optique de mesure de distance (170),
dans lequel l'unité de réception de faisceau (80) présente un miroir paraboloïde (85) ayant une surface de miroir de forme parabolique, le miroir paraboloïde (85) étant conçu pour concentrer le rayonnement renvoyé (81, 181) atteignant la surface de miroir en un point focal, et en particulier conçu pour réfléchir le rayonnement renvoyé (81, 181) atteignant un centre de la surface de miroir selon un angle de 65° à 75°, en particulier de 70°,
en particulier dans lequel

• un élément de couplage (88) est prévu au point focal pour coupler le rayonnement renvoyé concentré (82) dans un guide d'ondes optiques (89), en particulier dans lequel un élément de déviation (86) est prévu dans le trajet de faisceau entre le miroir paraboloïde (85) et l'élément de couplage (88) ; et/ou

• le miroir paraboloïde (85) est disposé à l'extérieur du trajet de faisceau commun du premier rayonnement de mesure (36) et du deuxième rayonnement de mesure (76, 176), en particulier dans lequel l'unité de réception de faisceau (80) présente un dispositif de division de faisceau (83) disposé dans le trajet de faisceau commun, pour diriger le rayonnement renvoyé (81, 181) sur le miroir paraboloïde (85).

4. Appareil de poursuite laser (1) selon l'une des revendications précédentes,
**caractérisé par**
une fonctionnalité de balayage, dans le cadre de laquelle l'appareil de poursuite laser (1) est configuré pour effectuer une pluralité de mesures de distance par rapport à une pluralité de points de mesure sur la surface (92) de l'objet de mesure (90) au moyen du deuxième rayonnement de mesure (76, 176), l'unité de commande et de traitement (73, 173) étant conçue de telle sorte que

• pour la pluralité de mesures de distance, les angles de rotation détectés respectifs sont associés à la distance mesurée, de sorte qu'une position de point est définie par l'association respective, et

• un nuage de points présentant un certain nombre des positions de point peut être généré.

**5.** Appareil de poursuite laser (1) selon l'une des revendications précédentes, **caractérisé par** une fonctionnalité d'étalonnage pour étalonner la première unité optique de mesure de distance et/ou la deuxième unité optique de mesure de distance (70, 170), l'unité de commande et de traitement (73, 173) étant conçue de telle sorte que

- le premier rayonnement de mesure (36) et le deuxième rayonnement de mesure (76, 176) peuvent être émis sur un rétroréflecteur (61) dans une relation temporelle, en particulier simultanément, et
- la première unité optique de mesure de distance et/ou la deuxième unité optique de mesure de distance (70, 170) peuvent être étalonnées sur la base d'une première distance par rapport au rétroréflecteur (61) mesurée par la première unité optique de mesure de distance et d'une deuxième distance par rapport au rétroréflecteur (61) mesurée par la deuxième unité optique de mesure de distance (70, 170).

**6.** Appareil de poursuite laser (1) selon l'une des revendications précédentes, **caractérisé en ce que**

- l'unité de direction de faisceau (10) présente un détecteur sensible à la position, en particulier un capteur surfacique de poursuite, pour détecter le premier rayonnement de mesure (36) ou le deuxième rayonnement de mesure (76, 176) réfléchi par une cible, de sorte que, en fonction d'une position du rayonnement de mesure réfléchi sur le détecteur, l'orientation du rayonnement de mesure peut être asservie pour une poursuite de cible continue, en particulier dans lequel l'unité de direction de faisceau (10) présente également une caméra de localisation (52) pour une localisation grossière de l'auxiliaire de mesure (60) et/ou une caméra d'observation (56) pour fournir des images à un utilisateur ;
- la première unité optique de mesure de distance présente un interféromètre (12) et/ou un distancemètre absolu (13) ;
- l'unité de direction de faisceau (10) présente des moyens de déviation, en particulier des diviseurs de faisceau (75, 175), pour générer un trajet de faisceau commun du premier rayonnement de mesure (36) et du deuxième rayonnement de mesure (76, 176) dans l'unité de direction de faisceau (10), de sorte que le premier rayonnement de mesure (36) et le deuxième rayonnement de mesure (76, 176) peuvent être émis par la même optique d'émission et de réception laser (51) ;
- l'optique d'émission et de réception laser (51) est configurée comme une optique d'émission laser (51a) et une optique de réception laser (51b) séparée de celle-ci ; et/ou
- l'unité de direction du faisceau présente deux optiques d'émission et de réception laser (51), le premier rayonnement de mesure (36) peut être émis par la première optique d'émission et de réception laser et le deuxième rayonnement de mesure (76, 176) peut être émis par la deuxième optique d'émission et de réception laser.

**7.** Procédé d'utilisation d'un module WFD (70) dans un appareil de poursuite laser (1) pour fournir une fonctionnalité de mesure supplémentaire, dans lequel l'appareil de poursuite laser (1) présente une unité de direction de faisceau (10) avec

- une optique d'émission et de réception laser (51) pour émettre un rayonnement de mesure et pour recevoir des réflexions de rayonnement de mesure, et
- un dispositif optique de mesure de distance avec au moins un premier distancemètre (12, 13) pour mesurer la distance par rapport à un auxiliaire de mesure (60) au moyen d'un premier rayonnement de mesure (36),

**caractérisé par**

- la génération d'un faisceau lumineux pulsé, en particulier d'un faisceau laser, en tant que deuxième rayonnement de mesure (76) par une source de rayonnement (71) du module WFD (70),
- l'émission du deuxième rayonnement de mesure (76) sur une cible à mesurer, une partie du deuxième rayonnement de mesure (76) étant amenée au détecteur (72) en tant que faisceau de référence (77), et une autre partie du deuxième rayonnement de mesure (76) étant émise par l'optique d'émission et de réception laser (51),
- une part (81) du deuxième rayonnement de mesure (76) renvoyée par la cible et reçue par l'optique d'émission et de réception laser (51) est amenée au détecteur (72),
- le détecteur (72) détecte des impulsions du faisceau de référence amené (77) et de la part renvoyée (81) du deuxième rayonnement de mesure (76),
- les impulsions détectées sont numérisées dans un processus de numérisation de la forme d'onde du module WFD (70) et

• une distance par rapport à la cible est déterminée sur la base des impulsions numérisées.

8.  Procédé selon la revendication 7, **caractérisé en ce que** la cible à mesurer est une surface à dispersion diffuse (92) d'un objet de mesure (90), dans lequel

    • le deuxième rayonnement de mesure (76, 176) est émis sur la surface à dispersion diffuse (92),
    • une part (81, 181) du deuxième rayonnement de mesure (76) est renvoyée par la surface (92) et
    • la distance par rapport à la surface (92) est déterminée,

    en particulier dans lequel une pluralité de mesures de distance est effectuée à une pluralité de points de mesure sur la surface (92) au moyen du deuxième rayonnement de mesure (76, 176), dans lequel

    • pour la pluralité de mesures de distance, une orientation actuelle de l'unité de direction de faisceau (10) est associée à la distance mesurée respective, de sorte qu'une position de point respective est définie par l'association, et
    • un nuage de points présentant un certain nombre des positions de point est généré.

9.  Procédé selon l'une des revendications 7 à 8,
    **caractérisé en ce que**
    la cible à mesurer est un rétroréflecteur (61), en particulier faisant partie d'un auxiliaire de mesure (60), dans lequel

    • le deuxième rayonnement de mesure (76, 176) est émis sur le rétroréflecteur (61),
    • le deuxième rayonnement de mesure (76, 176) est réfléchi par le rétroréflecteur (61) en tant que réflexion de rayonnement de mesure (81, 181) et
    • la distance par rapport au rétroréflecteur (61) est déterminée,

    en particulier dans lequel le premier rayonnement de mesure (36) et le deuxième rayonnement de mesure (76, 176) sont émis sur le rétroréflecteur (61), une distance (36) mesurée au moyen du premier rayonnement de mesure et une distance mesurée au moyen du deuxième rayonnement de mesure (76, 176) étant utilisées pour étalonner le premier distancemètre optique (12, 13) et/ou le module WFD (70), en particulier le premier rayonnement de mesure (36) et le deuxième rayonnement de mesure (76, 176) étant émis simultanément.

10. Produit programme d'ordinateur, comprenant des instructions qui amènent l'appareil de poursuite laser selon l'une des revendications 1, 2 et 4 à 6 à mettre en œuvre les étapes du procédé selon les revendications 7, 8 ou 9.

*Fig. 1*

*Fig. 2*

Fig. 3

*Fig. 4*

*Fig. 5*

Fig. 6a

*Fig. 6b*

Fig. 8

Fig. 7b

Fig. 7a

Fig. 9

Fig. 10

EP 3 032 277 B1

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0553266 A
- WO 2007079600 A1
- US 5973788 A
- WO 9740342 A
- WO 2004036145 A
- EP 2620745 A1
- WO 2006040263 A1
- EP 1869397 B1

- US 2014226145 A1
- EP 2557391 A1
- CH 706633 A2
- EP 2634594 A1
- WO 03062744 A1
- WO 2009103172 A1
- DE 19610970 A1

**In der Beschreibung aufgeführte Nicht-Patentliteratur**

- **N. R. NEWBURY ; T.-A. LIU ; I. CODDINGTON ; F. GIORGETTA ; E. BAUMANN ; W. C. SWANN.** Frequency-Comb Based Approaches to Precision Ranging Laser Radar. National Institute of Standards and Technology